# EUROPEAN PATENT SPECIFICATION

(11) **EP 4 013 100 B1**
(45) Date of publication and mention of the grant of the patent: **21.05.2025**
(21) Application number: 20853338.0
(22) Date of filing: 30.06.2020
(51) Int. Cl.: H04W 24/02, H04W 24/10, H04B 7/185, H04W 84/06

(54) **COMMUNICATION METHOD, APPARATUS AND COMPUTER READABLE STORAGE MEDIUM**
KOMMUNIKATIONSVERFAHREN UND -VORRICHTUNG SOWIE COMPUTERLESBARES SPEICHERMEDIUM
PROCÉDÉ ET APPAREIL DE COMMUNICATION ET MOYEN DE STOCKAGE LISIBLE PAR ORDINATEUR

(30) Priority: 14.08.2019 WO PCT/CN2019/100658
(43) Date of publication of application: 15.06.2022
(73) Proprietor: Huawei Technologies Co., Ltd., Longgang Shenzhen, Guangdong 518129 (CN)
(72) Inventor: GENG, Tingting, Shenzhen, Guangdong 518129 (CN); YANG, Chenchen, Shenzhen, Guangdong 518129 (CN)
(74) Representative: Gill Jennings & Every LLP
(86) International application number: PCT/CN2020/099438
(87) International publication number: WO 2021/027423

(56) References cited:
- CN-A- 101 932 046
- CN-A- 105 813 144
- US-A1- 2012 275 315
- INTEL CORPORATION: "RAN2 impact on Non-Public Network Deployment using CAG", vol. RAN WG2, no. Athens, Greece; 20190225 - 20190301, 15 February 2019 (2019-02-15), pages 1 - 6, XP051602136, Retrieved from the Internet <URL:http://www.3gpp.org/ftp/tsg%5Fran/WG2%5FRL2/TSGR2%5F105/Docs/R2%2D1900761%2Ezip> [retrieved on 20190215]
- ERICSSON: "Terminology correction of ANR", 3GPP DRAFT; R3-082701, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050323969
- ERICSSON: "NSA/SA NR cell indication in EUTRAN CGI reporting", vol. RAN WG2, no. Montreal, Canada; 20180702 - 20180706, 1 July 2018 (2018-07-01), XP051466949, Retrieved from the Internet <URL:http://www.3gpp.org/ftp/Meetings%5F3GPP%5FSYNC/RAN2/Docs> [retrieved on 20180701]
- HUAWEI ET AL: "Consideration on connected mode procedures", vol. RAN WG2, no. Chongqing, China; 20191014 - 20191018, 4 October 2019 (2019-10-04), pages 1 - 6, XP051790357, Retrieved from the Internet <URL:http://www.3gpp.org/ftp/tsg_ran/WG2_RL2/TSGR2_107bis/Docs/R2-1912310.zip> [retrieved on 20191004]
- HUAWEI; HISILICON: "Consideration on Connected Mode Procedures", 3GPP DRAFT; R2-1912310 CONSIDERATION ON CONNECTED MODE PROCEDURES, vol. RAN WG2, 4 October 2019 (2019-10-04), Chongqing, China, pages 1 - 6, XP051790357

## Description

### TECHNICAL FIELD

This application relates to the field of wireless communications technologies, and in particular, to a communications method and apparatus.

### BACKGROUND

An automatic neighbor relation (automatic neighbor relation, ANR) can be used to automatically establish a neighboring cell relationship, to effectively reduce manpower costs. In a process in which the ANR is used to maintain a neighboring relation table (neighbor cell relation table, NCRT) of a cell (denoted as a cell A), when a network device determines that a physical cell identifier (physical cell identifier, PCI) that is of a target cell and that is reported by a terminal device appears for the first time, the network device may send a cell global identifier (cell global identification, CGI) request message to the terminal device, to indicate the terminal device to read a CGI of the target cell and report the CGI to the network device.

However, the target cell may not be able to be added to the neighboring relation table of the cell A. For example, the cell A may not support mobility between the cell A and the target cell. In other words, in this case, a step in which the terminal device reports the CGI of the target cell to the network device is redundant and invalid. Consequently, this is not conductive to a reduction in energy consumption of the terminal device, and wastes signaling overheads.

INTEL CORPORATION, "RAN2 impact on Non-Public Network Deployment using CAG", vol. RAN WG2, no. Athens, Greece; 20190225 - 20190301, (20190215), pages 1 - 6, 3GPP DRAFT; R2-1900761 - NPN_SOLUTION2_V02, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg%5Fran/WG2%5FRL2/TSGR2%5F105/Docs/R2%2D1900761%2Ezip, (20190215), discusses RAN2 impact on non-public network deployment using CAG.

ERICSSON, "Terminology correction of ANR", 3GPP DRAFT; R3-082701, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20080924), no. Prague, Czech Republic; 20080924, discusses terminology correction of Automatic Neighbor Relation Function.

ERICSSON, "NSA/SA NR cell indication in EUTRAN CGI reporting", vol. RAN WG2, no. Montreal, Canada; 20180702 - 20180706, (20180701), 3GPP DRAFT; R2-1809680 - SA NR CELL INDICATION IN EUTRAN CGI REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; URL: http://www.3gpp.org/ftp/Meetings%5F3GPP%5FSYNC/RAN2/Docs, (20180701), discusses NSA/SA NR cell indication in EUTRAN CGI reporting.

### SUMMARY

This application provides a communications method and apparatus. During maintenance of a neighboring relation table, a terminal device can selectively report, based on an indication of a network device, only a CGI of a target cell that meets a requirement, to reduce unnecessary reporting, reduce energy consumption of the terminal device, and reduce signaling overheads.

The invention has been defined in the independent claims 1, 6 and 7. Further specific technical features have been defined in the dependent claims.

According to a first aspect, a communications method is provided. The method may be performed by a terminal device, or may be performed by a chip or a circuit configured in the terminal device. This is not limited in this application.

The method includes: receiving a cell global identifier (CGI) request message with respect to a target cell from a network device; and determining, based on a capability of the terminal device, whether to report a CGI of the target cell to the network device, where the capability is related to a type of a first-type network, and the target cell belongs to the first-type network. The first-type network includes any one of the following networks: a public land mobile network, a standalone non-public network, a non-standalone non-public network, and a non-terrestrial network.

Optionally, it is determined, based on the capability, not to report the CGI of the target cell to the network device.

Optionally, it is determined, based on the capability, to report the CGI of the target cell to the network device.

In this application, during maintenance of a neighboring relation table, the terminal device can selectively report, based on the capability of the terminal device, only a CGI of a target cell that meets a requirement, instead of directly reporting CGIs of all target cells to the network device, to reduce unnecessary reporting, reduce energy consumption of the terminal device, and reduce signaling overheads.

With reference to the third aspect, in some implementations of the third aspect, the determining, based on a capability, whether to report a CGI of the target cell to the network device includes: reporting the CGI of the target cell to the network device when there is a capability of accessing the first-type network; or not reporting the CGI of the target cell to the network device when there is no capability of accessing the first-type network.

With reference to the third aspect, in some implementations of the third aspect, the determining, based on a capability, whether to report a CGI of the target cell to the network device includes: reporting the CGI of the target cell to the network device when there is a capability of accessing the first-type network and a function of accessing the first-type network is enabled; or not reporting the CGI of the target cell to the network device when there is a capability of accessing the first-type network and a function of accessing the first-type network is not enabled.

With reference to the third aspect, in some implementations of the third aspect, the determining, based on a capability, whether to report a CGI of the target cell to the network device includes: reporting the CGI of the target cell to the network device when a first network can be accessed; or not reporting the CGI of the target cell to the network device when a first network cannot be accessed, where the target cell belongs to the first network.

Optionally, the first-type network may alternatively be another network such as Wi-Fi. This is not limited in this application.

With reference to the third aspect, in some implementations of the third aspect, when it is determined to report the CGI of the target cell to the network device, and the target cell belongs to the non-terrestrial network, the method further includes: reporting a service parameter of the target cell to the network device, where the service parameter of the target cell includes one or more of the following: a type of a device that provides a service for the target cell, an architecture of a satellite communication system to which the device that provides a service for the target cell belongs, and a type of the target cell, where the type of the device that provides a service for the target cell includes a low earth orbit satellite, a medium earth orbit satellite, a highly elliptical orbit satellite, a geostationary earth orbit satellite, or a network device in a high altitude platform communications system; the architecture of the satellite communication system includes a regenerative type or a transparent type; and the type of the target cell includes a fixed cell or a moving cell.

In some possible implementations, when the device that provides a service for the target cell is a satellite, the service parameter that is of the target cell and that is reported by the terminal device to the network device may include an architecture used for a satellite communication system that provides a service for the target cell.

In some possible implementations, when the service provided for the target cell is a non-geostationary satellite, the service parameter that is of the target cell and that is reported by the terminal device to the network device may include the type of the target cell. The non-geostationary satellite may be a low earth orbit satellite, a medium earth orbit satellite, or a highly elliptical orbit satellite.

According to a second aspect, a terminal device is provided. The terminal device includes units configured to perform a method according to the first aspect or any one of the implementation manners thereof.

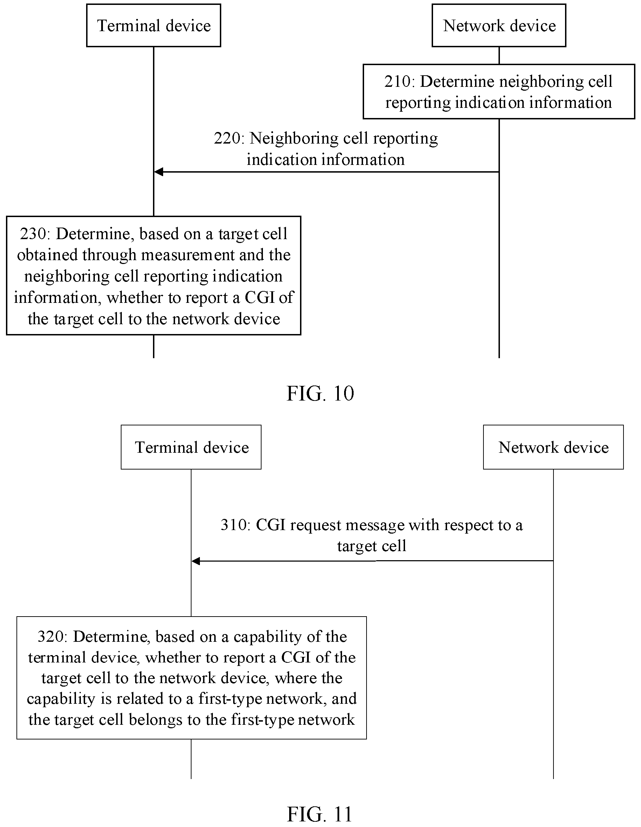

According to a third aspect, a computer-readable storage medium is provided, wherein the computer-readable storage medium stores a computer program, which when run on a computer causes the computer to perform a method according to the first aspect or any one of the implementation manners In the following detailed description, embodiments of the invention are mainly described with reference to figure 11. Other figures and passages are presented for illustrative purposes allowing a better understanding of the invention.

### BRIEF DESCRIPTION OF DRAWINGS

FIG. 1 is a schematic diagram of an example of a communications system applicable to an implementation of this application;
FIG. 2 is a schematic diagram of a transition relationship among three RRC modes;
FIG. 3 to FIG. 5 are schematic diagrams of satellite communication systems;
FIG. 6 is a schematic diagram of fixed cells obtained through projection by a non-geostationary satellite;
FIG. 7 is a schematic diagram of moving cells obtained through projection by a non-geostationary satellite;
FIG. 8 is a schematic diagram of establishing a neighboring cell relationship based on an ANR;
FIG. 9 is a schematic diagram of another example of a communications system applicable to an implementation of this application;
FIG. 10 is a schematic flowchart of an example of a communications method according to this application;
FIG. 11 is a schematic flowchart of another example of a communications method according to this application;
FIG. 12 is a schematic flowchart of still another example of a communications method according to this application;
FIG. 13 is a schematic diagram of a communications device according to an implementation of this application;
FIG. 14 is a schematic diagram of a structure of a terminal device according to an implementation of this application.
FIG. 15 is a schematic diagram of a communications device according to another implementation of this application; and
FIG. 16 is a schematic diagram of a structure of a network device according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

The technical solutions in the implementations of this application may be applied to various communications systems such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communications system, a 5th generation (5th generation, 5G) communications system, or a future new radio access technology (new radio access technology, NR).

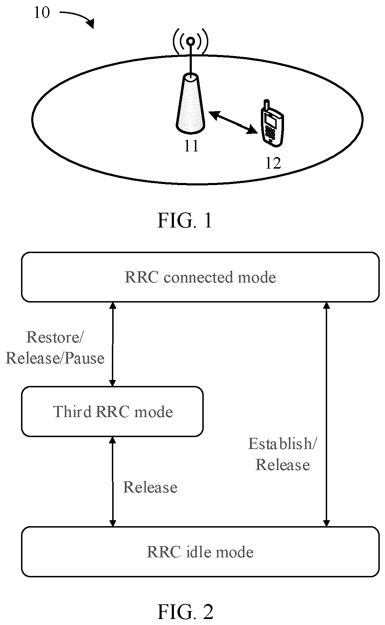

For ease of understanding of the implementations of this application, first, a communications system applicable to the implementations of this application is described in detail with reference to FIG. 1. FIG. 1 is a schematic diagram of a communications system applicable to an implementation of this application. As shown in FIG. 1, the communications system 10 may include at least one network device such as a network device 11 shown in FIG. 1; the communications system 10 may further include at least one terminal device such as a terminal device 12 shown in FIG. 1. The network device 11 and the terminal device 12 may communicate with each other through a radio link. A plurality of antennas may be configured for each communications device such as the network device 11 or the terminal device 12. The plurality of antennas may include at least one transmit antenna configured to send a signal and at least one receive antenna configured to receive a signal. In addition, the communications device further additionally includes a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving. Therefore, the network device 11 and the terminal device 12 may communicate with each other by using a multiple-antenna technology.

It should be understood that the network device in the wireless communications system may be any device that has a wireless transceiver function. The device includes but is not limited to an evolved NodeB (evolved NodeB, eNB, or eNodeB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or a network device in a high altitude platform station (high altitude platform station, HAPS) communications system. Alternatively, the network device may be a gNB or a transmission point (TRP or TP) in a 5G system such as an NR system, one or a group of antenna panels (including a plurality of antenna panels) of the gNB in the 5G system, or may be a network node constituting the gNB or the transmission point, for example, a baseband unit (BBU) or a distributed unit (distributed unit, DU).

In some deployments, the gNB may include a centralized unit (centralized unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer; the DU implements functions of a radio link control (radio link control, RLC) layer, a media access control (media access control, MAC) layer, and a physical (physical, PHY) layer. Information at the RRC layer eventually becomes information at the PHY layer, or is obtained by converting information at the PHY layer. Therefore, in the architecture, higher layer signaling, for example, RRC layer signaling, may also be considered as being sent by the DU or sent by the DU and the CU. It may be understood that the network device may be a CU node, a DU node, or a device including the CU node and the DU node. In addition, the CU may be classified as a network device in a radio access network (radio access network, RAN), or the CU may be classified as a network device in a core network (core network, CN). This is not limited in this application.

It should be further understood that, the terminal device in the wireless communications system may also be referred to as user equipment (user equipment, UE), an access terminal, a subscriber unit, a subscriber station, a mobile station, a mobile station, a remote station, a remote terminal, a mobile device, a user terminal, a terminal, a wireless communications device, a user agent, or a user apparatus. In the implementations of this application, the terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the implementations of this application.

In the implementations of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in the implementations of this application is not particularly limited in the implementations of this application, provided that the entity can run a program that records code of the method provided in the implementations of this application to perform communication according to the method provided in the implementations of this application. For example, the entity for performing the method provided in the implementations of this application may be a terminal device, a network device, or a functional module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable device, carrier or medium. For example, the computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to radio channels and various other media that can store, include, and/or carry instructions and/or data.

To facilitate understanding of the implementations of this application, related technical content in this application is briefly described first.

### 1. Non-public network

The non-public network (non-public networks, NPN) is a network under discussion in the 3GPP standard. Different from a public land mobile network (public land mobile networks, PLMN), the NPN network allows access of only some users with specific permission. The non-public network may also be referred to as a private network, and the non-public network may be understood as a network that is private relative to a public network, for example, an internal network built in a company, a school, or a factory. A terminal device that is not subscribed to the non-public network is not allowed to access the non-public network. Currently, the non-public network may be deployed in the following manners:
(1) The non-public network may be a base station specific in a non-public network or a cell in a core network. A terminal device that supports the non-public network may camp on the base station and the core network and initiate a service. The non-public network is usually referred to as a standalone non-public network (standalone non-public networks, SNPN). Different SNPN networks may be identified by using different NPN IDs. According to an existing communications protocol, a mobile country code (mobile contrary code, MCC) of a PLMN ID of the SNPN network is 999, and a mobile network code (mobile net code, MNC) is not defined. If the base station is shared, a PLMN ID of a public network may alternatively be used.

In addition to an NPN ID of the SNPN network, the SNPN network has the PLMN ID of the SNPN network. In other words, to accurately distinguish between two different SNPN networks, the SNPN network may be identified by using both the PLMN ID and the NPN ID.

The SNPN network and the PLMN network each have a standalone access network (radio access network, RAN) and a core network (core network, CN). Core networks of the SNPN network and the PLMN network may be connected by using an N3IWF network element. Because the SNPN network and the PLMN network do not share a core network, mobility is not supported between the SNPN network and the PLMN network. For example, a cell handover is not supported between an SNPN cell and a PLMN cell.

In an LTE system and a 5G system, mobility in an RRC connected mode is a cell handover, and mobility in an RRC non-connected mode is cell reselection.

(2) The non-public network may alternatively be a non-standalone (non-standalone) non-public network. The non-standalone non-public network may also be referred to as a closed access group (closed access group, CAG). Different CAG networks (namely, different non-standalone non-public networks) may be identified by using different CAG IDs. The CAG network and a PLMN network may share a core network, and some network devices in the CAG network may access the PLMN network. Therefore, mobility is supported between the CAG network and the PLMN network. For example, a cell handover is supported between a CAG cell and a PLMN cell.

### 2. Non-terrestrial network

The non-terrestrial network (non-terrestrial network, NTN) is a communication scenario in a 5G system. A conventional terrestrial network cannot provide seamless coverage for a terminal device, especially in a place in which a base station cannot be deployed, for example, the sea, the desert, or the air. Therefore, the non-terrestrial network is introduced into the 5G system. In the NTN network, a base station or some functions of the base station are deployed on a high altitude platform or a satellite to provide seamless coverage for a terminal device, and a natural disaster imposes low impact on the high altitude platform or the satellite, so that reliability of the 5G system can be improved.

In the NTN network, a terminal device having a long antenna may be communicatively connected to a base station deployed on the high altitude platform or the satellite, the high altitude platform may be a hot air balloon, an airplane, or another aircraft. The satellite may be a low earth orbit (low earth orbit, LEO) satellite, a medium earth orbit (medium earth orbit, MEO) satellite, a geostationary earth orbit (geostationary earth orbit, GEO) satellite, or a highly elliptical orbit (highly elliptical orbiting, HEO) satellite, or the like.

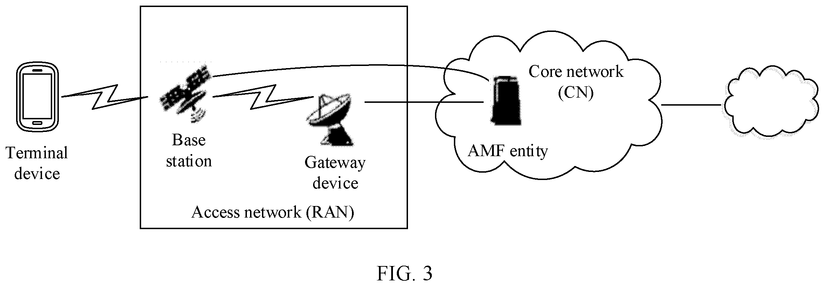

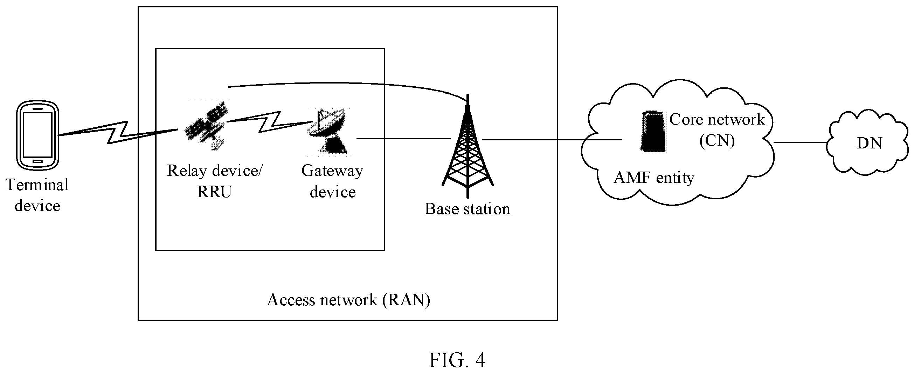

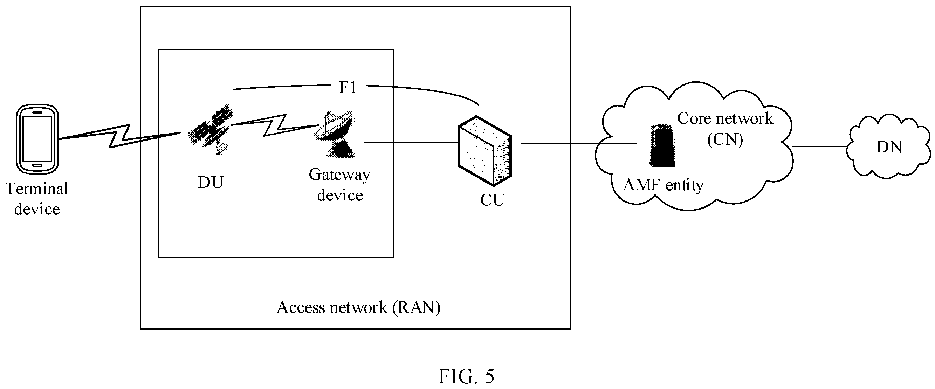

FIG. 3 to FIG. 5 show satellite communication systems applicable to an implementation of this application. A satellite communication system shown in FIG. 3 is of a regenerative type, and a satellite has a function of a base station. Satellite communication systems shown in FIG. 4 and FIG. 5 are of a transparent type, and a satellite has some functions of a base station. For example, a satellite in FIG. 4 has a function of a relay device, or has a function of a remote radio unit (remote radio unit, RRU). For another example, a satellite in FIG. 5 has a function of a distributed unit (distributed unit, DU), and may implement a function of a base station together with a centralized unit (centralized unit, CU).

A GEO satellite and an LEO satellite are used as examples to describe a mechanism in which a satellite provides coverage for a cell.
(1) GEO satellite: The GEO satellite is also referred to as a geostationary satellite, and a movement speed of the GEO satellite is the same as a rotation speed of the earth. Therefore, the GEO satellite remains a stationary state relative to the ground. Correspondingly, a cell covered by the GEO satellite is also stationary. A coverage area of the cell of the GEO satellite is large. For example, a diameter of the cell is usually 500 km.
(2) LEO satellite: There are many non-geostationary satellites. The LEO satellite is used as an example. The LEO satellite moves fast relative to the ground, and a movement speed is about 7 km/s. Therefore, a coverage area of a service provided by the LEO satellite moves accordingly. A cell obtained on the ground through projection by the LEO satellite has two modes, and the two modes are respectively a fixed cell (fixed cell) and a moving cell (moving cell).

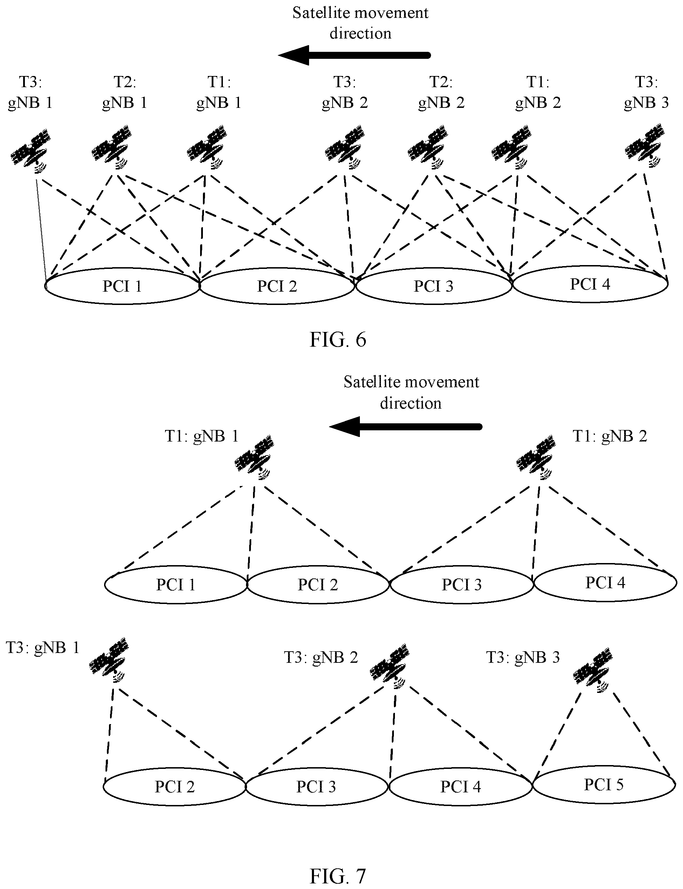

Fixed cell: The cell obtained on the ground through projection is stationary relative to the ground. An LEO satellite over the cell may cover a same location on the ground by adjusting an antenna angle. When an LEO satellite cannot cover the ground, another LEO satellite takes over. As shown in FIG. 6, a mapping manner of the fixed cell means that a location of the cell on the ground is fixed, and a moving satellite adjusts a beam of the moving satellite to form the cell. For example, at a moment T1, a cell 1 and a cell 2 are covered by a beam of a gNB 1, and a cell 3 and a cell 4 are covered by a beam of a gNB 2; at a moment T2, although both the gNB 1 and the gNB 2 move leftwards, but may still adjust the beam of the gNB 1 and the beam of the gNB 2, to ensure coverage of the cell 1, the cell 2, the cell 3, and the cell 4; and in comparison with the moment T1, at a moment T3, the gNB 1 and the gNB 2 have moved an enough long distance, the gNB 1 cannot adjust the beam to provide coverage for the cell 2, and the gNB 2 cannot adjust the beam to provide coverage for the cell 4. In this case, the gNB 2 may provide coverage for the cell 2, and the gNB 3 may provide coverage for the cell 4.

Moving cell: The cell obtained on the ground through projection moves along with the LEO satellite. The LEO satellite keeps an antenna direction unchanged in a moving process. For example, an antenna of the LEO satellite is always perpendicular to the ground. As shown in FIG. 7, a mapping manner of the moving cell means that a moving satellite does not dynamically adjust a beam direction of the moving satellite, and a beam generated by the moving satellite moves on the ground as the satellite moves. For example, at a moment T1, an area shown in FIG. 7 is covered by a cell 1 and a cell 2 of a gNB 1, and a cell 3 and a cell 4 of a gNB 2, and at a moment T3, the area is covered by the cell 2 of the gNB 1, the cell 3 and the cell 4 of the gNB 2, and a cell 5 of a gNB 3.

### 3. RRC mode

In a 5G system, RRC modes of a terminal device include an RRC connected mode (RRC_CONNECTED), an RRC inactive mode or a third RRC mode (RRC_INACTIVE), and an RRC idle mode (RRC_IDLE). FIG. 2 is a schematic diagram of a transition relationship among three RRC modes.

When the terminal device is in the RRC connected mode, a link is established between the terminal device and each of a base station and a core network, and data may be directly transmitted to the terminal device when the data arrives at the network. When the terminal device is in the third RRC mode (or the RRC inactive mode), it indicates that a link is once established between the terminal device and each of a base station and a core network, but a link between the terminal device and the base station is released. Although the link is released, the base station stores a context of the terminal device. When data needs to be transmitted, the base station may quickly restore the link. When the terminal device is in the RRC idle mode, there is no link between the terminal device and each of a base station and a network. When data needs to be transmitted, a link needs to be established between the terminal device and each of the base station and the core network.

### 4. Measurement

Mobility management is an important part in wireless mobile communication. The mobility measurement is a general term of related content used to ensure that a communications link between a network and a terminal device is not interrupted due to movement of the terminal device. Based on a mode of the terminal device, the mobility management may be generally divided into two parts: mobility management in an idle mode and mobility management in a connected mode.

In the idle mode, the mobility management is mainly a cell selection/reselection (cell selection/reselection) process. In the connected mode, the mobility management is mainly a cell handover (handover). The cell selection/reselection and the handover are performed based on a measurement result. Therefore, mobility measurement is a basis of the mobility management. A basic measurement mechanism is that the network delivers a measurement configuration by using related signaling, and the terminal device measures a related frequency or a cell based on the configuration, and reports a result to the network in a form required in the measurement configuration. The network may make a next decision based on content reported by the terminal device.

### 5. Early measurement

To reduce time for configuring dual connectivity (dual connectivity, DC) or carrier aggregation (carrier aggregation, CA), idle-mode measurement and third-mode measurement may be introduced into a DC scenario and a CA scenario. The idle-mode measurement and the third-mode measurement are collectively referred to as early measurement (early measurement).

When a network sets a terminal device to an idle mode or a third mode, a valid timer may be carried in an RRC release message, and a specific measurement configuration is sent to the terminal device by using a system broadcast message or dedicated signaling. The specific measurement configuration indicates a to-be-measured frequency and an (optional) cell list of the terminal device. When performing measurement in the idle mode or the third mode within a running time of the timer, the terminal device stores an obtained measurement result. When the terminal device enters a connected mode, the terminal device reports the stored measurement result to the network, so that the network evaluates whether corresponding serving cell configuration may be performed for the terminal device.

### 6. Automatic neighbor relation

The automatic neighbor relation is an important function of a self-organizing and self-optimization network (self-organizing and self-optimization network, SON) technology. Different from a conventional manner in which a network engineer performs configuration and adjustment based on a site survey, an ANR function is introduced, to trigger a base station to start measurement, collect data, generate an alarm and a processing suggestion, and optimize a neighboring cell relationship based on a statistics result of a related key performance index (key performance index, KPI) in a network. An intermediate process of this processing is automatically performed, to greatly reduce manpower costs.

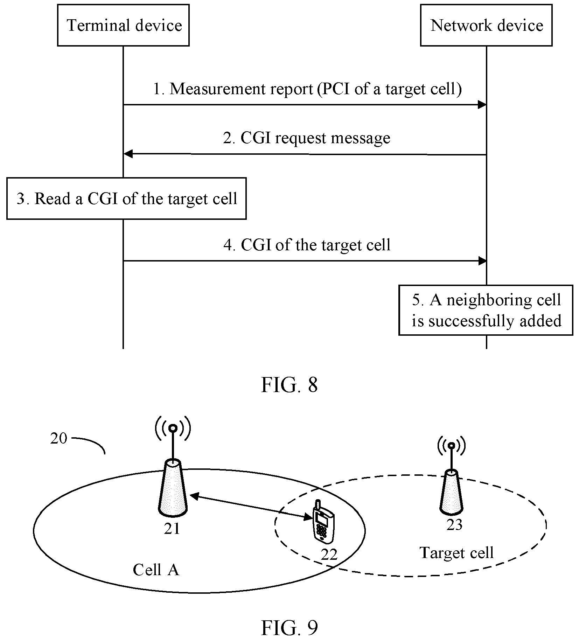

The ANR function is implemented with assistance of a terminal device, and is a function set by the base station when the base station needs to learn of a condition of a surrounding neighboring cell to better make various decisions such as measurement and a handover. Briefly, each base station maintains a neighboring relation table for a cell, and adds or deletes a neighboring cell in the table based on various measurement results reported by the terminal device. FIG. 8 is a schematic diagram of establishing a neighboring cell relationship based on an ANR. The process includes the following steps.

Step 1: The terminal device reports, to a base station of a cell A (for example, the cell A is a serving cell of the terminal device, and the base station is a serving base station of the terminal device), a measurement report including a PCI of a target cell obtained through measurement. For example, PCI = 5, which represents the target cell. The PCI is a local identifier, and is not unique in an entire network.

Step 2: If the base station determines that the PCI of the target cell does not exist in a neighboring relation table of the cell A, or the base station finds that the PCI appears for the first time (the PCI is unrecognized) at a corresponding frequency, or the base station finds that the PCI is unknown (for example, PCI = 5 is unknown), the base station sends a CGI request message to the terminal device, where the CGI request message includes the PCI of the target cell, and is used to indicate the terminal device to read a CGI of the target cell and report the CGI to the base station.

Step 3: The terminal device reads the CGI of the target cell. For example, the terminal device may read a system information block 1 (system information block 1, SIB 1) broadcast by the target cell, to obtain the CGI of the target cell. Optionally, the CGI includes an evolved cell global identifier (evolved cell global identifier, ECGI) or a new radio access technology cell global identifier (NR cell global identifier, NCGI).

Step 4: The terminal device reports the CGI of the target cell to the base station. For example, the terminal device may send the CGI of the target cell to the base station by using the measurement report.

Step 5: If the base station finds that the target cell can be added and used as a neighboring cell of the cell A, or the base station finds that the cell A supports mobility between the cell A and the target cell, the base station adds a correspondence between the PCI and the CGI of the target cell to the neighboring relation table of the cell A. In other words, a neighboring cell relationship is established between the cell A and the target cell, so that the terminal device can be handed over from the cell A to the target cell, to optimize a network neighboring cell relationship of the cell A, ensure that the terminal device can be handed over to a cell with a best signal in a timely manner on a serving boundary of the cell A, and ensure call quality and performance of the entire network.

It should be understood that the foregoing related description of the non-public network, the non-terrestrial network, the RRC mode, the measurement, the early measurement, the automatic neighbor relation, and the like is merely for ease of understanding of the technical solutions of this application, but constitutes no limitation on this application.

The following further describes the ANR with reference to FIG. 8.

As shown in FIG. 8, this case may occur in a process of maintaining the neighboring relation table of the cell A. In step 5, the base station finds that the cell A does not support mobility between the cell A and the target cell. For example, a cell handover is not supported between the cell A and the target cell. In other words, the target cell cannot be added and used as a neighboring cell of the cell A, or the target cell cannot be added to the neighboring relation table of the cell A. In this case, for the base station, the CGI reported by the terminal device is of no value, and the step in which the terminal device reports the CGI (namely, step 4) is invalid reporting and is meaningless. Consequently, this is not conductive to a reduction in energy consumption of the terminal device, and wastes signaling overheads.

The foregoing case is further described in detail below with reference to FIG. 9.

FIG. 9 is a schematic diagram of another example of a communications system applicable to an implementation of this application. As shown in FIG. 9, a communications system 20 may include at least one network device, for example, a base station 21 shown in FIG. 9. The communications system 20 may further include at least one terminal device, for example, a terminal device 22 shown in FIG. 9. The base station 21 may communicate with the terminal device 22 through a radio link. For example, the base station 21 may communicate with the terminal device 22 by using a cell A. In other words, the cell A is a serving cell of the terminal device 22.

During maintenance of a neighboring relation table of the cell A, the terminal device 22 may measure a neighboring cell of the cell A, and obtain a target cell shown in FIG. 9 through measurement (in FIG. 9, the base station 23 is a base station of the target cell). The terminal device 22 may report a PCI of the target cell to the base station 21. If the base station 21 finds that the PCI of the target cell does not exist in the neighboring relation table of the cell A, the base station 21 may send a CGI request message to the terminal device 22, to indicate the terminal device 22 to read a CGI of the target cell and report the CGI of the target cell to the base station 21.

Further, the terminal device 22 reports the CGI of the target cell to the base station 21. After receiving the CGI of the target cell, the base station 21 may find that mobility is not supported between the cell A and the target cell, and the target cell cannot be added and used as a neighboring cell of the cell A.

For example, the cell A is a PLMN cell (in other words, in this case, the base station 21 is a base station in a PLMN network), but the target cell is an SNPN cell (in other words, in this case, the base station 23 is a base station in an SNPN network).

For another example, the cell A is an SNPN cell, but the target cell is any one of a PLMN cell, a CAG cell, or an NTN cell.

For another example, the cell A is a cell in a first SNPN network, but the target cell is a cell in a second SNPN network.

Mobility is supported neither between the SNPN cell and each of the PLMN cell, the CAG cell, and the NTN cell, nor between cells in different SNPN networks. Therefore, the target cell cannot be added and used as a neighboring cell of the cell A. In other words, that the terminal device 22 reports the CGI of the target cell to the base station 21 (which corresponds to step 4 in FIG. 8) is invalid reporting. Consequently, this is not conductive to a reduction in energy consumption of the terminal device, and wastes signaling overheads.

This application provides a communications method. During maintenance of a neighboring relation table, a terminal device can selectively report, based on an indication of a network device, only a CGI of a target cell that meets a requirement, to reduce energy consumption of the terminal device, and reduce signaling overheads.

The following describes the communications method provided in an implementation of this application with reference to the accompanying drawings. A network device in this implementation may be the network device 11 in FIG. 1, and a terminal device may be the terminal device 12 in FIG. 1. In addition, the network device in this implementation may alternatively be the base station 21 in FIG. 9, and the terminal device may be the terminal device 22 in FIG. 9.

FIG. 10 is a schematic flowchart of a communications method 200 according to this application. The following describes the communications method 200 provided in this implementation of this application with reference to FIG. 10. This implementation has not been claimed as such. The method 200 includes the following steps.

Step 210: A network device determines neighboring cell reporting indication information, where the neighboring cell reporting indication information is used by a terminal device and a target cell obtained through measurement to determine whether to report a cell global identifier (CGI) of the target cell to the network device.

Step 220: The network device sends the neighboring cell reporting indication information to the terminal device.

Correspondingly, in step 220, the terminal device receives the neighboring cell reporting indication information sent by the network device.

Step 230: The terminal device determines, based on the target cell obtained through measurement and the neighboring cell reporting indication information, whether to report the CGI of the target cell to the network device.

Specifically, the terminal device and the network device in this implementation of this application may be communications devices that belong to an LTE system, may be communications devices that belong to a 5G system, or may be communications devices that belong to any other system. This is not limited in this application.

Further, the network device may establish a communication connection to the terminal device, and the network device may perform neighboring cell relationship management on a cell (denoted as a cell A) of the network device by using the terminal device, for example, add or delete a neighboring cell in a neighboring relation table of the cell A.

Optionally, the cell A may be any one of a plurality of cells of the network device.

Optionally, the cell A may be a serving cell of the terminal device.

Optionally, the terminal device may have a plurality of serving cells, and the cell A may be any one of the plurality of serving cells of the terminal device.

Specifically, the terminal device may measure a neighboring cell around the cell A. The terminal device may measure signal quality of the neighboring cell around the cell A.

For example, the terminal device may measure any one or more parameters of reference signal received power (reference signal receiving power, RSRP), a signal-to-noise ratio (signal noise ratio, SNR), a received signal strength indicator (received signal strength indication, RSSI), reference signal received quality (reference signal receive quality, RSRQ), and the like of the neighboring cell.

Optionally, the terminal device may measure the neighboring cell around the cell A based on measurement configuration information sent by the network device.

Optionally, the measurement configuration information includes information about at least one to-be-measured frequency, and the terminal device performs cell measurement based on the frequency.

After obtaining the target cell through measurement, the terminal device may report a PCI of the target cell to the network device. For example, the terminal device may send the PCI of the target cell to the network device by using a measurement report.

The network device may receive the PCI of the target cell, and if the network device determines that the PCI of the target cell does not exist in the neighboring relation table of the cell A, or the network device finds that the PCI appears for the first time (the PCI is unrecognized) at a corresponding frequency, or the network device finds that the PCI is unknown, the network device may send a CGI request message to the terminal device. The CGI request message is used to indicate the terminal device to read the CGI of the target cell and report the CGI of the target cell to the network device.

Optionally, the CGI request message includes the PCI of the target cell.

In step 210, the terminal device may determine the neighboring cell reporting indication information. The neighboring cell reporting indication information can be used by the terminal device and the target cell obtained through measurement to determine whether to report the CGI of the target cell to the network device.

Specifically, the neighboring cell reporting indication information may be used by the terminal device to jointly determine, with reference to information about the target cell, whether to report the CGI of the target cell to the network device.

For example, the neighboring cell reporting indication information may be used to indicate a cell that needs to be reported, or used to indicate a cell that does not need to be reported, and the terminal device may determine, with reference to the information about the target cell (for example, a network type of the target cell or a cell identifier of the target cell), whether to report the CGI of the target cell to the network device.

Optionally, the neighboring cell reporting indication information is used to indicate at least one type of the following content: a first-type network that needs to be reported, a first network corresponding to the first-type network, and a first cell corresponding to a first network type.

For example, the first-type network may be any one of a PLMN network, an SNPN network, a CAG network, or an NTN network.

In addition, the first-type network may alternatively be another network such as Wi-Fi. This is not limited in this application.

Optionally, when the neighboring cell reporting indication information is used to indicate the first-type network, the neighboring cell reporting indication information may be used to indicate any one of the PLMN network, the SNPN network, the CAG network, the NTN network, and the like.

Optionally, when the neighboring cell reporting indication information is used to indicate the first network corresponding to the first-type network, the neighboring cell reporting indication information may be used to indicate any one of the PLMN network, the SNPN network, the CAG network, the NTN network, and the like.

For example, the neighboring cell reporting indication information may be used to indicate a network whose network identifier is a PLMN ID 1 in the PLMN network. In this case, a parameter included in the neighboring cell reporting indication information may include the PLMN ID 1.

For another example, the neighboring cell reporting indication information may be used to indicate a network whose network identifiers are a PLMN ID 1 and an NPN ID 1 in the SNPN network. In this case, parameters included in the neighboring cell reporting indication information may include the PLMN ID 1 and the NPN ID 1.

Optionally, when the neighboring cell reporting indication information is used to indicate the first cell corresponding to the first-type network, the neighboring cell reporting indication information may be used to indicate any cell in the PLMN network, the SNPN network, the CAG network, the NTN network, and the like.

For example, the neighboring cell reporting indication information may be used to indicate a cell 1 in a network whose network identifier is a PLMN ID 1 in the PLMN network, and the cell 1 may be identified by using a frequency 1 and a PCI 1. In this case, parameters included in the neighboring cell reporting indication information may include the PLMN ID 1, the frequency 1, and the PCI 1.

For another example, the neighboring cell reporting indication information may be used to indicate a cell 1 in a network whose network identifiers are a PLMN ID 1 and an NPN ID 1 in the SNPN network, and the cell 1 may be identified by using a frequency 1 and a PCI 1. In this case, parameters included in the neighboring cell reporting indication information may include the PLMN ID 1, the NPN ID 1, the frequency 1, and the PCI 1.

The foregoing content is merely used as an example, but is not intended to constitute a limitation on this application. Content included in the neighboring cell reporting indication information and an indication manner are not limited in this application.

Optionally, the neighboring cell reporting indication information may be an explicit indication. For example, the first-type network (the first network corresponding to the first-type network or the first cell corresponding to the first network type) may be indicated based on a specification in a protocol or a system or based on an agreement between the network device and the terminal device by using a string of specific code, a one-bit 0 or 1 or by using NULL and non-NULL for distinguishing.

For example, two-bit code may be used to indicate the foregoing various types of networks. Based on the specification in the protocol or the system or based on the agreement between the network device and the terminal device, two-bit "00", "01", "10", and "11" may be used to respectively indicate that the first-type network is the PLMN network, the SNPN network, the CAG network, and the NTN network.

It should be understood that a limited quantity of time-frequency resources need to be occupied when the first-type network (the first network corresponding to the first-type network or the first cell corresponding to the first network type) is explicitly indicated by using a string of specific code, or the like, and a quantity of time-frequency resources is far less than a quantity of time-frequency resources that need to be occupied when the CGI is reported.

Optionally, the neighboring cell reporting indication information may alternatively be an implicit indication. For example, based on a specification in a protocol or a system or based on an agreement between the network device and the terminal device, the first-type network (the first network corresponding to the first-type network or the first cell corresponding to the first network type) is indirectly indicated by sending the CGI request message on different time-frequency resources. However, the terminal device may determine indication content of the neighboring cell reporting indication information based on a receiving situation (a time-frequency resource on which the information is received) of the sent CGI request message.

It should be understood that in the implementations of this application, the "protocol" may be a standard protocol in the communications field, for example, may include an LTE protocol, an NR protocol, and a related protocol applied to a future communications system. This is not limited in this application.

Optionally, in this implementation of this application, the neighboring cell reporting indication information is not only used to indicate a first network type that needs to be reported (the first network corresponding to the first-type network or the first cell corresponding to the first network type), but also used to indicate another network type that needs to be reported (a network corresponding to another type of network or a cell corresponding to the another type of network). This is not limited in this application.

Optionally, the neighboring cell reporting indication information may alternatively be used to indicate at least one type of the following content: a second-type network that does not need to be reported, a second network corresponding to the second-type network, and a second cell corresponding to a second network type.

For example, the second-type network may be any one of a PLMN network, an SNPN network, a CAG network, or an NTN network.

In addition, the second-type network may alternatively be another network such as Wi-Fi. This is not limited in this application.

Similarly, in this implementation of this application, the neighboring cell reporting indication information is not only used to indicate a second network type that does not need to be reported (the second network corresponding to the second-type network or the second cell corresponding to the second network type), but also used to indicate another network type that does not need to be reported (a network corresponding to another type of network or a cell corresponding to the another type of network). This is not limited in this application.

In this implementation of this application, how the network device determines the neighboring cell reporting indication information is not limited. In a possible implementation, the network device may determine the neighboring cell reporting indication information based on mobility supported by a cell on which neighboring cell relationship management is currently performed. In other words, the network device may determine the neighboring cell reporting indication information based on mobility supported by the cell A.

For example, the cell A is a cell in the SNPN network, and is a cell in a network whose network identifiers are a PLMN ID 1 and an NPN ID 1. The SNPN network does not support mobility between the SNPN network and each of the PLMN network, the CAG network, and the NTN network. In addition, mobility is not supported between different SNPN networks. Optionally, in this case, the neighboring cell reporting indication information determined by the network device may be used to indicate that the first network corresponding to the first-type network that needs to be reported is a network whose network identifiers are the PLMN ID 1 and the NPN ID 1.

Optionally, in this case, the neighboring cell reporting indication information determined by the network device may alternatively be used to indicate that the second-type network that does not need to be reported is at least one of the PLMN network, the CAG network, and the NTN network.

For another example, the cell A is a cell in the PLMN network. The PLMN network supports mobility between the PLMN network and each of the CAG network and the NTN network, but does not support mobility between the PLMN network and the SNPN network. Optionally, in this case, the neighboring cell reporting indication information determined by the network device may be used to indicate that the first-type network that needs to be reported is at least one of the PLMN network, the CAG network, and the NTN network.

Optionally, in this case, the neighboring cell reporting indication information determined by the network device may alternatively be used to indicate that the second-type network that does not need to be reported is the SNPN network.

In step 220, the network device sends the neighboring cell reporting indication information to the terminal device.

Optionally, the neighboring cell reporting indication information may be carried in the CGI request message with respect to the target cell.

Optionally, the neighboring cell reporting indication information may alternatively be carried in another system message or a dedicated message. This is not limited in this application.

In step 230, the terminal device determines, based on the target cell obtained through measurement and the neighboring cell reporting indication information, whether to report the CGI of the target cell to the network device.

Optionally, the terminal device determines, based on the target cell obtained through measurement and the neighboring cell reporting indication information, to report the CGI of the target cell to the network device.

Optionally, the terminal device determines, based on the target cell obtained through measurement and the neighboring cell reporting indication information, not to report the CGI of the target cell to the network device.

Optionally, the neighboring cell reporting indication information is used to indicate at least one type of the following content: the first-type network that needs to be reported, the first network corresponding to the first-type network, and the first cell corresponding to the first network type.

The terminal device may determine the network type of the target cell by reading a system message (for example, an SIB 1) of the target cell, or determine a network to which the target cell belongs, may further determine whether the network type of the target cell or the network to which the target cell belongs matches the first-type network or the first network indicated by the neighboring cell reporting indication information, and determine, based on a matching result, whether to report the CGI of the target cell to the network device.

For example, the neighboring cell reporting indication information is used to indicate the first-type network that needs to be reported. When the target cell belongs to the first-type network, the terminal device reports the CGI of the target cell to the network device; or when the target cell does not belong to the first-type network, the terminal device does not report the CGI of the target cell to the network device.

In a specific example, the first-type network may be an SNPN network, and the target cell is a cell in the PLMN network. In other words, in this case, the target cell does not belong to the first-type network. Therefore, the terminal device may not report the CGI of the target cell to the network device.

For another example, the neighboring cell reporting indication information is used to indicate the first network that needs to be reported. When the target cell belongs to the first network, the terminal device reports the CGI of the target cell to the network device; or when the target cell does not belong to the first network, the terminal device does not report the CGI of the target cell to the network device.

In a specific example, the first network may be a network whose network identifiers are a PLMN ID 1 and an NPN ID 1, and the target cell is a cell in a network whose network identifiers are a PLMN ID 1 and an NPN ID 2. In other words, in this case, the target cell does not belong to the first network. Therefore, the terminal device may not report the CGI of the target cell to the network device.

In addition, the terminal device may further determine the cell identifier of the target cell (for example, may determine a frequency and the PCI of the target cell), determine whether the cell identifier matches the first cell, and then determine, based on a matching result, whether to report the CGI of the target cell to the network device.

For example, the neighboring cell reporting indication information is used to indicate a first cell that needs to be reported. When the target cell and the first cell are a same cell, the terminal device reports the CGI of the target cell to the network device; or when the target cell and the first cell are different cells, the terminal device does not report the CGI of the target cell to the network device.

Optionally, the neighboring cell reporting indication information may alternatively be used to indicate at least one type of the following content: a second-type network that does not need to be reported, a second network corresponding to the second-type network, and a second cell corresponding to a second network type.

For example, the neighboring cell reporting indication information is used to indicate the second-type network that does not need to be reported. When the target cell belongs to the second-type network, the terminal device does not report the CGI of the target cell to the network device; or when the target cell does not belong to the second-type network, the terminal device reports the CGI of the target cell to the network device.

In a specific example, the second-type network may be an SNPN network, and the target cell is a cell in the PLMN network. In other words, in this case, the target cell does not belong to the second-type network. Therefore, the terminal device may not report the CGI of the target cell to the network device.

For another example, the neighboring cell reporting indication information is used to indicate a second network that does not need to be reported. When the target cell belongs to the second network, the terminal device does not report the CGI of the target cell to the network device; or when the target cell does not belong to the second network, the terminal device reports the CGI of the target cell to the network device.

For another example, the neighboring cell reporting indication information is used to indicate a second cell that does not need to be reported. When the target cell and the second cell are a same cell, the terminal device does not report the CGI of the target cell to the network device; or when the target cell and the second cell are different cells, the terminal device reports the CGI of the target cell to the network device.

According to the communications method provided in this implementation of this application, when maintaining the neighboring relation table, the network device may send the neighboring cell reporting indication information to the terminal device, and the terminal device may determine, based on the target cell and the neighboring cell reporting indication information, whether to report the CGI of the target cell. In this implementation of this application, the terminal device can selectively report, based on an indication of the network device, only a CGI of a target cell that meets a requirement, instead of directly reporting CGIs of all target cells to the network device, to reduce unnecessary reporting, reduce energy consumption of the terminal device, and reduce signaling overheads.

In addition, in this implementation of this application, the neighboring cell reporting indication information may be determined based on the mobility supported by the cell on which neighboring cell relationship management is currently performed, to improve reporting efficiency of the CGI of the target cell, reduce or avoid invalid reporting, and facilitate efficient neighboring cell relationship management.

Optionally, when the terminal device determines to report the CGI of the target cell, and the target cell belongs to the NTN network, the terminal device may further report, to the network device, a type of a device that provides a service for the target cell. The type of the device is an HEO satellite, a GEO satellite, an MEO satellite, or an LEO satellite that provides a service for the target cell, or may be a network device in a HAPS. Correspondingly, after receiving the CGI of the target cell and the type of the device that provides a service for the target cell that are reported by the terminal device, the network device may perform corresponding processing, for example, store, in a local database, the CGI of the target cell and the type of the device that provides a service for the target cell, so that a proper serving cell can be selected for the terminal device as soon as possible in a process in which the terminal device performs a handover or initial access, to reduce a delay in performing the handover or random access by the terminal device, and ensure communication quality of the terminal device. For example, if the terminal device wants to access a cell for which the MEO satellite provides a service, the network device may select the proper serving cell for the terminal device based on the stored type of the device that provides a service for the target cell.

Optionally, the CGI of the target cell and the type of the device that provides a service for the target cell that are reported by the terminal device may be carried in a same message, or may be carried in different messages. This is not limited in this implementation of this application.

Optionally, when the device that provides a service for the target cell is a satellite, the terminal device may further report, to the network device, an architecture used for a satellite communication system that provides a service for the target cell. For example, the architecture used for the satellite communication system is of a regenerative type or a transparent type. Correspondingly, after receiving the CGI of the target cell and the architecture used for the satellite communication system that provides a service for the target cell that are reported by the terminal device, the network device may perform corresponding processing, for example, store, in a local database, the CGI of the target cell and the architecture used for the satellite communication system that provides a service for the target cell, so that a proper serving cell is selected for the terminal device in a process in which the terminal device performs a handover or initial access, to reduce a delay in performing the handover or random access by the terminal device, and ensure communication quality of the terminal device. For example, if the terminal device wants to access a cell for which a regenerative satellite communication system provides a service, the network device may select the proper serving cell for the terminal device based on the stored type of the device that provides a service for the target cell.

Optionally, the CGI of the target cell and the architecture used for the satellite communication system that provides a service for the target cell that are reported by the terminal device may be carried in a same message, or may be carried in different messages. This is not limited in this implementation of this application.

Optionally, when the device that provides a service for the target cell is a non-geostationary satellite (for example, the MEO satellite, the LEO satellite, or the HEO satellite), the terminal device may further report the type of the target cell to the network device. For example, the target cell is a moving cell or a fixed cell. Correspondingly, after receiving the CGI of the target cell and the type of the target cell that are reported by the terminal device, the network device may perform corresponding processing, for example, store the CGI of the target cell and the type of the target cell in a local database, so that a proper serving cell is selected for the terminal device in a process in which the terminal device performs a handover or initial access, to reduce a delay in performing the handover or random access by the terminal device, and ensure communication quality of the terminal device. For example, if the terminal device wants to access the fixed cell, the network device may select the proper serving cell for the terminal device based on the stored type of the target cell.

Optionally, the CGI of the target cell and the type of the target cell that are reported by the terminal device may be carried in a same message, or may be carried in different messages. This is not limited in this implementation of this application.

With reference to FIG. 9, this case may also occur in a process of maintaining the neighboring relation table of the cell A, mobility is supported between the cell A and the target cell, and the target cell may be added to the neighboring relation table of the cell A. However, if all terminal devices that are currently in the cell A do not have a capability of accessing the target cell, even if the target cell has been added to the neighboring relation table of the cell A, all the terminal devices in the cell A cannot use the target cell, for example, cannot be handed over to the target cell and use the target cell as a serving cell. In this case, that the terminal device 22 reports the CGI of the target cell to the base station 21 (which corresponds to step 4 in FIG. 8) is also invalid reporting. Consequently, this is not conductive to a reduction in energy consumption of the terminal device, and wastes signaling overheads.

In a specific example, the cell A may be a cell in the PLMN network, the target cell is a cell in the NTN network, mobility is supported between the cell A and the target cell, and the target cell may be added to the neighboring relation table of the cell A.

However, no terminal device that is currently in the cell A has a capability of accessing the NTN network (for example, no terminal device has a long antenna, has low transmit power, and cannot communicate with a network device (namely, the base station 23 of the target cell in FIG. 9) deployed on a satellite or an aerial platform in the NTN network). In this case, even if the target cell is added to the neighboring relation table of the cell A, no terminal device in the cell A can use the target cell. In other words, in this case, that the terminal device 22 reports the CGI of the target cell to the base station 21 is invalid reporting. Consequently, this is not conductive to a reduction in energy consumption of the terminal device, and wastes signaling overheads.

This application further provides a communications method. During maintenance of a neighboring relation table, a terminal device can selectively report, based on an access capability of the terminal device, only a CGI of a target cell that meets a requirement, to reduce energy consumption of the terminal device, and reduce signaling overheads.

The following describes the communications method provided in an implementation of this application with reference to the accompanying drawings. A network device in this implementation may be the network device 11 in FIG. 1, and a terminal device may be the terminal device 12 in FIG. 1. In addition, the network device in this implementation may alternatively be the base station 21 in FIG. 9, and the terminal device may be the terminal device 22 in FIG. 9.

FIG. 11 is a schematic flowchart of a communications method 300 according to the claimed invention. The following describes the communications method 300 with reference to FIG. 11. The method 300 includes the following steps.

Step 310: A network device sends a cell global identifier (CGI) request message with respect to a target cell to a terminal device.

Correspondingly, in step 310, the terminal device receives the cell global identifier (CGI) request message that is of the target cell and that is sent by the network device.

Step 320: In all embodiments of the present invention, the terminal device determines, based on a capability of the terminal device, whether to report a CGI of the target cell to the network device, where the capability is related to a first-type network, and the target cell belongs to the first-type network.

Specifically, the terminal device and the network device in this implementation of this application may be communications devices that belong to an LTE system, may be communications devices that belong to a 5G system, or may be communications devices that belong to any other system. This is not limited in this application.

Further, the network device may establish a communication connection to the terminal device, and the network device may perform neighboring cell relationship management on a cell (denoted as a cell A) of the network device by using the terminal device, for example, add or delete a neighboring cell in a neighboring relation table of the cell A.

Specifically, the terminal device may measure a neighboring cell around the cell A. The terminal device may measure signal quality of the neighboring cell around the cell A.

For example, the terminal device may measure any one or more parameters of RSRP, an SNR, an RSSI, RSRQ, and the like of the neighboring cell.

Optionally, the terminal device may measure the neighboring cell around the cell A based on measurement configuration information sent by the network device.

Optionally, the measurement configuration information includes information about at least one to-be-measured frequency, and the terminal device performs cell measurement based on the frequency.

Optionally, the target cell is a cell with best signal quality in a plurality of neighboring cells measured by the terminal device.

After obtaining the target cell through measurement, the terminal device may report a PCI of the target cell to the network device. For example, the terminal device may send the PCI of the target cell to the network device by using a measurement report.

The network device may receive the PCI of the target cell, and determine that the PCI of the target cell does not exist in the neighboring relation table of the cell A. In this case, step 310 may be performed.

In step 310, the network device sends the CGI request message with respect to the target cell to the terminal device. The CGI request message is used to indicate the terminal device to read the CGI of the target cell and report the CGI of the target cell to the network device.

Optionally, the CGI request message includes the PCI of the target cell.

Optionally, the terminal device reads the CGI of the target cell from an SIB 1 sent by the target cell.

In step 320, the terminal device determines, based on the capability of the terminal device, whether to report the CGI of the target cell to the network device. The capability is related to the first-type network, and the target cell belongs to the first-type network.

Specifically, the target cell belongs to the first-type network. Optionally, the first-type network includes any one of the following networks: a PLMN network, an SNPN network, a CAG network, and an NTN network.

In addition, the first-type network may alternatively be another network such as Wi-Fi. This is not limited in this application.

The terminal device may determine, based on the capability of the terminal device, whether to report the CGI of the target cell to the network device. The capability is related to the first-type network. Optionally, the capability may be a capability of accessing the first-type network.

For example, the terminal device may determine, based on the capability of the terminal device, not to report the CGI of the target cell to the network device.

For another example, the terminal device may determine, based on the capability of the terminal device, to report the CGI of the target cell to the network device.

In this implementation of this application, how the terminal device determines, based on the capability of the terminal device, whether to report the CGI of the target cell to the network device is not limited. In a possible implementation, the terminal device may determine, based on the capability of accessing the first-type network by the terminal device, whether to report the CGI of the target cell to the network device.

Optionally, when the terminal device has the capability of accessing the first-type network, the terminal device reports the CGI of the target cell to the network device; or when the terminal device does not have the capability of accessing the first-type network, the terminal device does not report the CGI of the target cell to the network device.

Optionally, when the terminal device has the capability of accessing the first-type network and a function of accessing the first-type network is enabled, the terminal device reports the CGI of the target cell to the network device; or when the terminal device has the capability of accessing the first-type network and a function of accessing the first-type network is not enabled, the terminal device does not report the CGI of the target cell to the network device.

Optionally, when the terminal device can access a first network, the terminal device reports the CGI of the target cell to the network device; or when the terminal device cannot access a first network, the terminal device does not report the CGI of the target cell to the network device. The target cell belongs to the first network (in other words, in this case, the first network is a network corresponding to the first-type network).

In this implementation of this application, during maintenance of the neighboring relation table, the terminal device can selectively report, based on the capability of the terminal device, only a CGI of a target cell that meets a requirement, instead of directly reporting CGIs of all target cells to the network device, to reduce unnecessary reporting, reduce energy consumption of the terminal device, and reduce signaling overheads.

Optionally, when the terminal device determines to report the CGI of the target cell, and the target cell belongs to the NTN network, the terminal device may further report, to the network device, a type of a device that provides a service for the target cell. The type of the device is an HEO satellite, a GEO satellite, an MEO satellite, or an LEO satellite that provides a service for the target cell, or may be a network device in a HAPS. Correspondingly, after receiving the CGI of the target cell and the type of the device that provides a service for the target cell that are reported by the terminal device, the network device may perform corresponding processing, for example, store, in a local database, the CGI of the target cell and the type of the device that provides a service for the target cell, so that a proper serving cell is selected for the terminal device in a process in which the terminal device performs a handover or initial access, to reduce a delay in performing the handover or random access by the terminal device, and ensure communication quality of the terminal device. For example, if the terminal device wants to access a cell for which the MEO satellite provides a service, the network device may select the proper serving cell for the terminal device based on the stored type of the device that provides a service for the target cell.

Optionally, the CGI of the target cell and the type of the device that provides a service for the target cell that are reported by the terminal device may be carried in a same message, or may be carried in different messages. This is not limited in this implementation of this application.

Optionally, when the device that provides a service for the target cell is a satellite, the terminal device may further report, to the network device, an architecture used for a satellite communication system that provides a service for the target cell. For example, the architecture used for the satellite communication system is of a regenerative type or a transparent type. Correspondingly, after receiving the CGI of the target cell and the architecture used for the satellite communication system that provides a service for the target cell that are reported by the terminal device, the network device may perform corresponding processing, for example, store, in a local database, the CGI of the target cell and the architecture used for the satellite communication system that provides a service for the target cell, so that a proper serving cell is selected for the terminal device in a process in which the terminal device performs a handover or initial access, to reduce a delay in performing the handover or random access by the terminal device, and ensure communication quality of the terminal device. For example, if the terminal device wants to access a cell for which a regenerative satellite communication system provides a service, the network device may select the proper serving cell for the terminal device based on the stored type of the device that provides a service for the target cell.

Optionally, the CGI of the target cell and the architecture used for the satellite communication system that provides a service for the target cell that are reported by the terminal device may be carried in a same message, or may be carried in different messages. This is not limited in this implementation of this application.

Optionally, when the device that provides a service for the target cell is a non-geostationary satellite (an MEO satellite, an LEO satellite, or an HEO satellite), the terminal device may further report a type of the target cell to the network device. For example, the target cell is a moving cell or a fixed cell. Correspondingly, after receiving the CGI of the target cell and the type of the target cell that are reported by the terminal device, the network device may perform corresponding processing, for example, store the CGI of the target cell and the type of the target cell in a local database, so that a proper serving cell is selected for the terminal device in a process in which the terminal device performs a handover or initial access, to reduce a delay in performing the handover or random access by the terminal device, and ensure communication quality of the terminal device. For example, if the terminal device wants to access the fixed cell, the network device may select the proper serving cell for the terminal device based on the stored type of the target cell.

Optionally, the CGI of the target cell and the type of the target cell that are reported by the terminal device may be carried in a same message, or may be carried in different messages. This is not limited in this implementation of this application.

With reference to the foregoing description of early measurement, in an existing mechanism, a measurement target configured by the network device for the terminal device may be improper. Consequently, the terminal device performs unnecessary measurement and reporting. Consequently, this is not conductive to a reduction in energy consumption of the terminal device, and wastes signaling overheads.

This application further provides a communications method. Measurement configuration information includes a cell blacklist. In this case, after the terminal device enters an idle mode or a third mode, the terminal device may measure a cell more efficiently, to improve measurement efficiency of the terminal device, and reduce energy consumption of the terminal device.

The following describes the communications method provided in an implementation of this application with reference to the accompanying drawings. A network device in this implementation may be the network device 11 in FIG. 1, and a terminal device may be the terminal device 12 in FIG. 1. In addition, the network device in this implementation may alternatively be the base station 21 in FIG. 9, and the terminal device may be the terminal device 22 in FIG. 9.

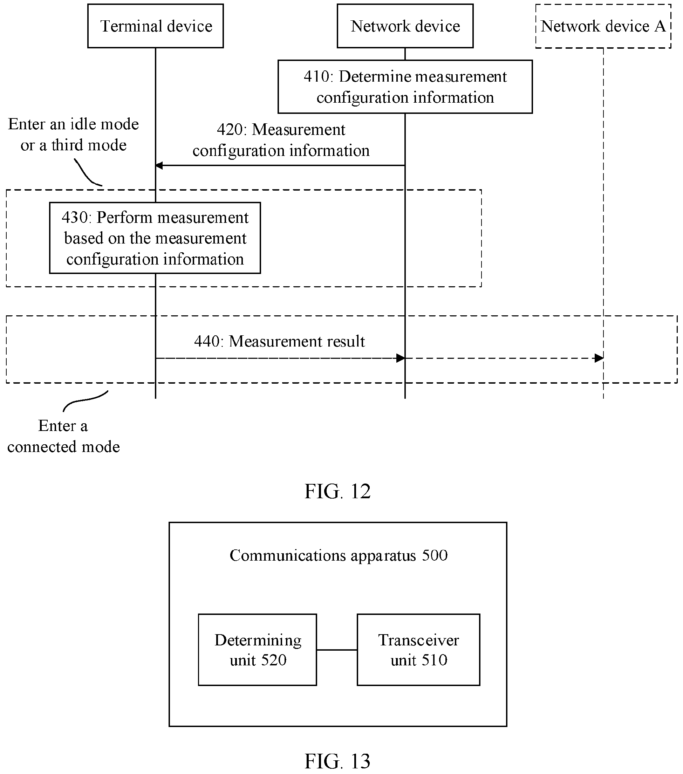

FIG. 12 is a schematic flowchart of a communications method 400 according to this application. The following describes the communications method 400 provided in this implementation of this application with reference to FIG. 12. This implementation has not been claimed as such. The method 400 includes the following steps.

Step 410: A network device determines measurement configuration information, where the measurement configuration information includes a cell blacklist, and the measurement configuration information is used to perform cell measurement when a terminal device is in an idle mode or a third mode.

Step 420: The network device sends the measurement configuration information to the terminal device.

Correspondingly, in step 420, the terminal device receives the measurement configuration information sent by the network device.

Step 430: When the terminal device is in the idle mode or the third mode, the terminal device performs cell measurement based on the measurement configuration information.

The terminal device and the network device in this implementation of this application may be communications devices that belong to an LTE system, may be communications devices that belong to a 5G system, or may be communications devices that belong to any other system. This is not limited in this application.

Optionally, the network device and the terminal device in this implementation of this application may be communications devices in a CA scenario and/or a DC scenario.

Specifically, in this implementation of this application, the network device determines the measurement configuration information. The measurement configuration information includes the cell blacklist, the cell blacklist includes at least one cell, and the measurement configuration information is used to perform cell measurement when the terminal device is in the idle mode or the third mode. During measurement, the terminal device may not measure a cell in the cell blacklist, so that measurement efficiency can be improved, and energy consumption of the terminal device can be reduced.

Optionally, the measurement configuration information includes a measurement object, and a cell in the cell blacklist is a cell corresponding to the measurement object. For example, the measurement object is at least one frequency, and the cell blacklist may be a cell (which may be identified by using a PCI) at the at least one frequency.

In this implementation of this application, how the network device determines the cell blacklist in the measurement configuration information is not limited. In a possible implementation, the cell blacklist includes a cell that is rejected when the network device performs neighboring cell relationship management.

It is easily understood that, the cell that is rejected when the network device performs neighboring cell relationship management may not support mobility between the cell and the network device. In other words, the rejected cell may be a cell that does not support CA and/or DC mobility between the cell and the network device. Therefore, measurement and reporting of the cell are redundant. The terminal device may not measure the rejected cell, to improve measurement efficiency, and reduce energy consumption of the terminal device.

In step 420, the network device sends the measurement configuration information to the terminal device.

Optionally, the measurement configuration information may be carried in an RRC release message.

Optionally, the RRC release message further carries a valid timer, and the terminal device measures a cell within a running time of the valid timer.

Optionally, the measurement configuration information may be carried in another system message or a dedicated message. This is not limited in this application.

In step 430, when the terminal device is in the idle mode or the third mode, the terminal device performs cell measurement based on the measurement configuration information. For example, the terminal device may measure a plurality of cells at a frequency different from a cell in the cell blacklist.

Optionally, the terminal device may first locally store a measurement result.

Optionally, the method 400 further includes:
Step 440: When the terminal device is in a connected mode, the terminal device sends the measurement result.

Optionally, the terminal device may send the measurement result to the network device.

Optionally, the terminal device may also send the measurement result to another network device (for example, a network device A in FIG. 12) different from the network device. This is not limited in this application.

In this implementation of this application, the measurement configuration information includes a cell blacklist. In this case, after the terminal device enters the idle mode or the third mode, the terminal device may measure a cell more efficiently, to improve measurement efficiency of the terminal device, and reduce energy consumption of the terminal device.

The communications methods in the implementations of this application are described above in detail with reference to FIG. 1 to FIG. 12. The following describes in detail apparatuses in the implementations of this application with reference to FIG. 13 to FIG. 16. It should be understood that the apparatuses shown in FIG. 13 to FIG. 16 can implement one or more steps in the method procedures shown in FIG. 10 to FIG. 12. To avoid repetition, details are not described herein again.

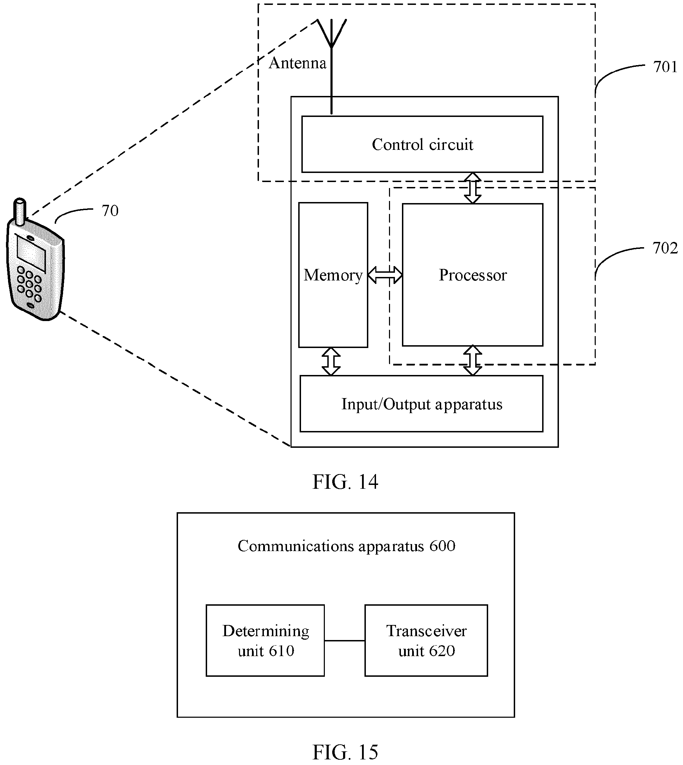

As noted above, the methods described with reference to figures 10 and 12 are not claimed as such. The description provided with reference to figures 13 and 14 should be construed accordingly.

FIG. 13 is a schematic diagram of a communications device according to an implementation of this application. The communications apparatus 500 shown in FIG. 13 includes a transceiver unit 510 and a determining unit 520.

The transceiver unit 510 is configured to receive neighboring cell reporting indication information sent by a network device.

The determining unit 520 is configured to determine, based on a target cell obtained through measurement and the neighboring cell reporting indication information, whether to report a cell global identifier (CGI) of the target cell to the network device.

Optionally, the neighboring cell reporting indication information is used to indicate at least one type of the following content: a first-type network that needs to be reported, a first network corresponding to the first-type network, and a first cell corresponding to a first network type.

Optionally, the neighboring cell reporting indication information is used to indicate at least one type of the following content: a second-type network that does not need to be reported, a second network corresponding to the second-type network, and a second cell corresponding to a second network type.

Optionally, the neighboring cell reporting indication information is determined based on mobility supported by a cell on which neighboring cell relationship management is currently performed.

Optionally, the determining unit 520 is further configured to: determine to report the CGI of the target cell to the network device when the neighboring cell reporting indication information is used to indicate the first-type network, and the target cell belongs to the first-type network; or determine to report the CGI of the target cell to the network device when the neighboring cell reporting indication information is used to indicate the first network, and the target cell belongs to the first network; or determine to report the CGI of the target cell to the network device when the neighboring cell reporting indication information is used to indicate the first cell, and the target cell and the first cell are a same cell.

Optionally, the determining unit 520 is further configured to: determine not to report the CGI of the target cell to the network device when the neighboring cell reporting indication information is used to indicate the second-type network, and the target cell belongs to the second-type network; or determine not to report the CGI of the target cell to the network device when the neighboring cell reporting indication information is used to indicate the second network, and the target cell belongs to the second network; or determine not to report the CGI of the target cell to the network device when the neighboring cell reporting indication information is used to indicate the second cell, and the target cell and the second cell are a same cell.

Optionally, the neighboring cell reporting indication information is carried in a CGI request message with respect to the target cell.

Optionally, the first-type network includes any one of the following networks: a public land mobile network, a standalone non-public network, a non-standalone non-public network, and a non-terrestrial network.

Optionally, the second-type network includes any one of the following networks: a public land mobile network, a standalone non-public network, a non-standalone non-public network, and a non-terrestrial network.

Optionally, when it is determined to report the CGI of the target cell, and the target cell belongs to the NTN network, the determining unit 520 is further configured to report, to the network device, a type of a device that provides a service for the target cell. The type of the device is an HEO satellite, a GEO satellite, an MEO satellite, or an LEO satellite that provides a service for the target cell, or may be a network device in a HAPS.

Optionally, when the device that provides a service for the target cell is a satellite, the determining unit 520 is further configured to report, to the network device, an architecture used for a satellite communication system that provides a service for the target cell. For example, the architecture used for the satellite communication system is of a regenerative type or a transparent type.

Optionally, when the device that provides a service for the target cell is a non-geostationary satellite (an MEO satellite, an LEO satellite, or an HEO satellite), the determining unit 520 is further configured to report a type of the target cell to the network device. For example, the target cell is a moving cell or a fixed cell.

In another implementation, the transceiver unit 510 is configured to receive a cell global identifier (CGI) request message that is of the target cell and that is sent by the network device.

The determining unit 520 is configured to determine, based on a capability of the apparatus 500, whether to report the CGI of the target cell to the network device. The capability is related to the first-type network, and the target cell belongs to the first-type network.

Optionally, the determining unit 520 is configured to: determine to report the CGI of the target cell to the network device when the apparatus 500 has a capability of accessing the first-type network; or determine not to report the CGI of the target cell to the network device when the apparatus 500 does not have a capability of accessing the first-type network.

Optionally, the determining unit 520 is configured to: determine to report the CGI of the target cell to the network device when the apparatus 500 has a capability of accessing the first-type network and a function of accessing the first-type network is enabled; or determine not to report the CGI of the target cell to the network device when the apparatus 500 has a capability of accessing the first-type network and a function of accessing the first-type network is not enabled.

Optionally, the determining unit 520 is configured to: determine to report the CGI of the target cell to the network device when the apparatus 500 can access the first network; or determine not to report the CGI of the target cell to the network device when the apparatus 500 cannot access the first network. The target cell belongs to the first network.

Optionally, the first-type network includes any one of the following networks: a public land mobile network, a standalone non-public network, a non-standalone non-public network, and a non-terrestrial network.

Optionally, when it is determined to report the CGI of the target cell, and the target cell belongs to the NTN network, the determining unit 520 is further configured to report, to the network device, a type of a device that provides a service for the target cell. The type of the device is an HEO satellite, a GEO satellite, an MEO satellite, or an LEO satellite that provides a service for the target cell, or may be a network device in a HAPS.

Optionally, when the device that provides a service for the target cell is a satellite, the determining unit 520 is further configured to report, to the network device, an architecture used for a satellite communication system that provides a service for the target cell. For example, the architecture used for the satellite communication system is of a regenerative type or a transparent type.

Optionally, when the device that provides a service for the target cell is a non-geostationary satellite (an MEO satellite, an LEO satellite, or an HEO satellite), the determining unit 520 is further configured to report a type of the target cell to the network device. For example, the target cell is a moving cell or a fixed cell.

In a possible implementation, the communications apparatus 500 may be a terminal device 70. A function of the determining unit may be implemented by a processor 702 in the terminal device, and a function of the transceiver unit may be implemented by using a transceiver 701 (namely, a combination of a control circuit and an antenna) in the terminal device. The following describes a structure of a terminal device in an implementation of this application with reference to FIG. 14.

FIG. 14 is a schematic diagram of a structure of a terminal device according to an implementation of this application. The terminal device is used in the system shown in FIG. 1, and performs functions of the terminal device in the foregoing method implementations. For ease of description, FIG. 14 shows only main components of the terminal device. As shown in FIG. 14, the terminal device 70 includes a processor, a memory, a control circuit, an antenna, and an input/output apparatus. The processor is mainly configured to process a communications protocol and communication data, control the entire terminal device, execute a software program, and process data of the software program, for example, configured to support the terminal device in performing the actions described in the foregoing method implementations. The memory is mainly configured to store the software program and the data. The control circuit is mainly configured to: perform conversion between a baseband signal and a radio frequency signal, and process the radio frequency signal. A combination of the control circuit and the antenna may also be referred to as a transceiver that is mainly configured to transmit and receive a radio frequency signal in a form of an electromagnetic wave. The input/output apparatus, such as a touchscreen, a display screen, and a keyboard, is mainly configured to receive data input by a user and output data to the user.

After the terminal device is powered on, the processor may read the software program in a storage unit, explain and execute instructions of the software program, and process the data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 14 shows only one memory and only one processor. In an actual terminal device, there may be a plurality of processors and a plurality of memories. The memory may also be referred to as a storage medium, a storage device, or the like. This is not limited in this implementation of this application.

In an optional implementation, the processor may include a baseband processor and a central processing unit. The baseband processor is mainly configured to process the communications protocol and the communication data. The central processing unit is mainly configured to control the entire terminal device, execute the software program, and process the data of the software program. Functions of the baseband processor and the central processing unit may be integrated into the processor in FIG. 14. A person skilled in the art may understand that the baseband processor and the central processing unit each may be an independent processor, and are interconnected by using a technology such as a bus. A person skilled in the art can understand that the terminal device may include a plurality of baseband processors to adapt to different network standards, the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communications protocol and the communication data may be built in the processor, or may be stored in the storage unit in a form of a software program. The processor executes the software program to implement a baseband processing function.

FIG. 15 is a schematic diagram of another example of a communications device according to an implementation of this application. This implementation has not been claimed as such. The communications apparatus 600 shown in FIG. 15 includes a determining unit 610 and a transceiver unit 620.

The determining unit 610 is configured to determine neighboring cell reporting indication information. The neighboring cell reporting indication information is used by a terminal device and a target cell obtained through measurement to determine whether to report a cell global identifier (CGI) of the target cell to the apparatus.

The transceiver unit 620 is configured to send the neighboring cell reporting indication information to the terminal device.

Optionally, the neighboring cell reporting indication information is used to indicate at least one type of the following content: a first-type network that needs to be reported, a first network corresponding to the first-type network, and a first cell corresponding to a first network type.

Optionally, the neighboring cell reporting indication information is used to indicate at least one type of the following content: a second-type network that does not need to be reported, a second network corresponding to the second-type network, and a second cell corresponding to a second network type.

Optionally, the neighboring cell reporting indication information is determined based on mobility supported by a cell on which neighboring cell relationship management is currently performed.

Optionally, the neighboring cell reporting indication information is carried in a CGI request message with respect to the target cell.

Optionally, the first-type network includes any one of the following networks: a public land mobile network, a standalone non-public network, a non-standalone non-public network, and a non-terrestrial network.

Optionally, the second-type network includes any one of the following networks: a public land mobile network, a standalone non-public network, a non-standalone non-public network, and a non-terrestrial network.

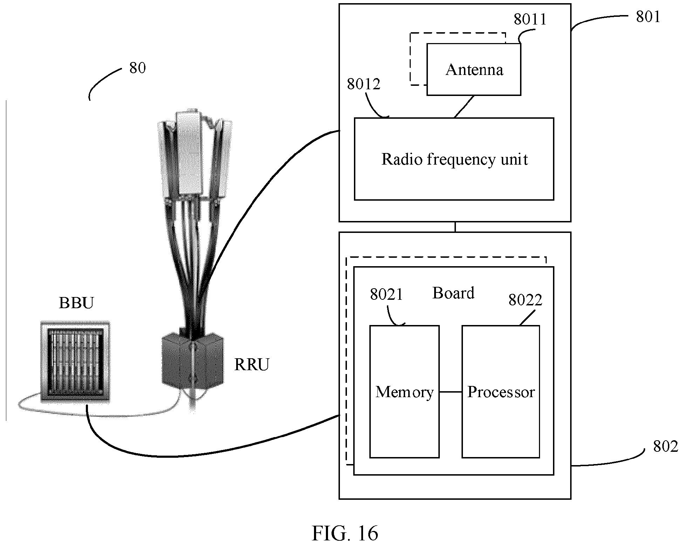

In a possible implementation, the communications apparatus 600 may be a network device, for example, a base station 80 described below. A function of the determining unit may be implemented by a processor 8022 in the base station, and a function of the transceiver unit may be implemented by using an RRU 801 in the base station 80. The following describes a structure of a network device in an implementation of this application with reference to FIG. 16.

FIG. 16 is a schematic diagram of a structure of a network device according to an implementation of this application, for example, may be a schematic diagram of a structure of a base station. This implementation has not been claimed as such. As shown in FIG. 16, the base station may be applied to the system shown in FIG. 1, and perform a function of the network device in the foregoing method implementations. The base station 80 may include one or more radio frequency units such as a remote radio unit (remote radio unit, RRU) 801 and one or more baseband units (baseband units, BBUs) (which may also be referred to as digital units, digital units, DUs) 802. The RRU 801 may be referred to as a transceiver unit, a transceiver, a transceiver circuit, a transceiver, or the like, and may include at least one antenna 8011 and a radio frequency unit 8012. The RRU 801 is mainly configured to: send and receive a radio frequency signal, and perform conversion between the radio frequency signal and a baseband signal, for example, configured to send the signaling message in the foregoing implementations to a terminal device. The BBU 802 is mainly configured to: perform baseband processing, control the base station, and the like. The RRU 801 and the BBU 802 may be physically disposed together, or may be physically separated, that is, in a distributed base station.

The BBU 802, also referred to as a processing unit, is a control center of the base station, and is mainly configured to implement baseband processing functions such as channel coding, multiplexing, modulation, and spectrum spreading. For example, the BBU (the processing unit) 802 may be configured to control the base station to perform an operation procedure related to the network device in the foregoing method implementations.

In an example, the BBU 802 may include one or more boards. A plurality of boards may jointly support a radio access network (such as an LTE network) of a single access standard, or may respectively support radio access networks (such as an LTE network, a 5G network, or another network) of different access standards. The BBU 802 further includes a memory 8021 and a processor 8022. The memory 8021 is configured to store necessary instructions and necessary data. For example, the memory 8021 stores a correspondence between a codebook index and a precoding matrix in the foregoing implementations. The processor 8022 is configured to control the base station to perform a necessary action, for example, is configured to control the base station to perform the operation procedure related to the network device in the foregoing method implementations. The memory 8021 and the processor 8022 may serve one or more boards. In other words, a memory and a processor may be independently disposed on each board, or a plurality of boards may share a same memory and a same processor. In addition, a necessary circuit may be further disposed on each board.

It should be understood that the processor in the implementations of this application may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that the memory in the implementations of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the methods provided in the implementations of this application, this application further provides a computer program product. The computer program product includes computer program code. When the computer program code is run on a computer, the computer is enabled to perform the method according to any one of the implementations shown in FIG. 10 to FIG. 12.

According to the methods provided in the implementations of this application, this application further provides a computer-readable medium. The computer-readable medium stores program code. When the program code is run on a computer, the computer is enabled to perform the method according to any one of the implementations shown in FIG. 10 to FIG. 12.

According to the methods provided in the implementations of this application, this application further provides a chip system. The chip system includes a processor, configured to: invoke a computer program from a memory, and run the computer program, so that a communications device on which the chip system is installed performs the method according to any one of the implementations shown in FIG. 10 to FIG. 12.

According to the methods provided in the implementations of this application, this application further provides a system. The system includes the foregoing one or more terminal devices and the foregoing one or more network devices.

All or some of the foregoing implementations may be implemented by software, hardware, firmware, or any combination thereof. When software is used to implement the implementations, all or some of the foregoing implementations may be implemented in a form of a computer program product. The computer program product includes one or more computer instructions or computer programs. When the program instructions or the computer programs are loaded and executed on a computer, all or some of the procedure or functions according to the implementations of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

For ease of understanding, the following describes terms used in a process of describing the solutions in this application.

In the implementations of this application, the "indication" may include a direct indication and an indirect indication, or may include an explicit indication and an implicit indication. Information indicated by using a piece of information (for example, the indication information described above) is referred to as to-be-indicated information. In a specific implementation process, the to-be-indicated information is indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is already learned of or pre-agreed on. For example, specific information may also be indicated by using a pre-agreed (for example, specified in a protocol) arrangement sequence of various pieces of information, to reduce indication overheads to some extent.

In the implementations of this application, terms and English abbreviations such as a cell global identifier (CGI), a physical cell identifier (PCI), an automatic neighbor relation (ANR), a public land mobile network (PLMN), a standalone non-public network (SNPN), a non-standalone non-public network (CAG), a non-terrestrial network (NTN) are all examples for ease of description, and should not constitute any limitation on this application. This application does not exclude a possibility of defining another term that can implement a same or similar function in an existing or a future protocol.

In the implementations of this application, the "communications protocol" may be a standard protocol in the communications field, for example, may include an LTE protocol, an NR protocol, and a related protocol applied to a future communications system. This is not limited in this application.

The term "and/or" in this specification describes only an association relationship between associated objects and represents that three relationships may exist. For example, A and/or B may represent the following three cases: Only A exists, both A and B exist, and only B exists. In addition, the character "/" in this specification usually represents an "or" relationship between the associated objects.

Sequence numbers of the foregoing processes do not mean execution sequences in the implementations of this application. The execution sequences of the processes should be determined based on functions and internal logic of the processes, and should not be construed as any limitation on the implementation processes of the implementations of this application.

A person of ordinary skill in the art may be aware that, in combination with the examples described in the implementations disclosed in this specification, units and algorithm steps can be implemented by electronic hardware or a combination of computer software and electronic hardware. Whether the functions are performed by using hardware or software depends on a particular application and a design constraint condition of the technical solutions. A person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, apparatus, and unit, refer to a corresponding process in the foregoing method implementations. Details are not described herein again.

In the several implementations provided in this application, it should be understood that the disclosed systems, apparatuses, and methods may be implemented in other manners. For example, the described apparatus implementations are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the implementations.

In addition, functional units in the implementations of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the implementations of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The scope of protection is defined by the appended claims. cell to the network device when the neighboring cell reporting indication information is used to indicate the first-type network, and the target cell belongs to the first-type network; or determine to report the CGI of the target cell to the network device when the neighboring cell reporting indication information is used to indicate the first network, and the target cell belongs to the first network; or determine to report the CGI of the target cell to the network device when the neighboring cell reporting indication information is used to indicate the first cell, and the target cell and the first cell are a same cell.

Optionally, the determining unit 520 is further configured to: determine not to report the CGI of the target cell to the network device when the neighboring cell reporting indication information is used to indicate the second-type network, and the target cell belongs to the second-type network; or determine not to report the CGI of the target cell to the network device when the neighboring cell reporting indication information is used to indicate the second network, and the target cell belongs to the second network; or determine not to report the CGI of the target cell to the network device when the neighboring cell reporting indication information is used to indicate the second cell, and the target cell and the second cell are a same cell.

Optionally, the neighboring cell reporting indication information is carried in a CGI request message with respect to the target cell.

Optionally, the first-type network includes any one of the following networks: a public land mobile network, a standalone non-public network, a non-standalone non-public network, and a non-terrestrial network.

Optionally, the second-type network includes any one of the following networks: a public land mobile network, a standalone non-public network, a non-standalone non-public network, and a non-terrestrial network.

Optionally, when it is determined to report the CGI of the target cell, and the target cell belongs to the NTN network, the determining unit 520 is further configured to report, to the network device, a type of a device that provides a service for the target cell. The type of the device is an HEO satellite, a GEO satellite, an MEO satellite, or an LEO satellite that provides a service for the target cell, or may be a network device in a HAPS.

Optionally, when the device that provides a service for the target cell is a satellite, the determining unit 520 is further configured to report, to the network device, an architecture used for a satellite communication system that provides a service for the target cell. For example, the architecture used for the satellite communication system is of a regenerative type or a transparent type.

Optionally, when the device that provides a service for the target cell is a non-geostationary satellite (an MEO satellite, an LEO satellite, or an HEO satellite), the determining unit 520 is further configured to report a type of the target cell to the network device. For example, the target cell is a moving cell or a fixed cell.

In another embodiment, the transceiver unit 510 is configured to receive a cell global identifier (CGI) request message that is of the target cell and that is sent by the network device.

The determining unit 520 is configured to determine, based on a capability of the apparatus 500, whether to report the CGI of the target cell to the network device. The capability is related to the first-type network, and the target cell belongs to the first-type network.

Optionally, the determining unit 520 is configured to: determine to report the CGI of the target cell to the network device when the apparatus 500 has a capability of accessing the first-type network; or determine not to report the CGI of the target cell to the network device when the apparatus 500 does not have a capability of accessing the first-type network.

Optionally, the determining unit 520 is configured to: determine to report the CGI of the target cell to the network device when the apparatus 500 has a capability of accessing the first-type network and a function of accessing the first-type network is enabled; or determine not to report the CGI of the target cell to the network device when the apparatus 500 has a capability of accessing the first-type network and a function of accessing the first-type network is not enabled.

Optionally, the determining unit 520 is configured to: determine to report the CGI of the target cell to the network device when the apparatus 500 can access the first network; or determine not to report the CGI of the target cell to the network device when the apparatus 500 cannot access the first network. The target cell belongs to the first network.

Optionally, the first-type network includes any one of the following networks: a public land mobile network, a standalone non-public network, a non-standalone non-public network, and a non-terrestrial network.

Optionally, when it is determined to report the CGI of the target cell, and the target cell belongs to the NTN network, the determining unit 520 is further configured to report, to the network device, a type of a device that provides a service for the target cell. The type of the device is an HEO satellite, a GEO satellite, an MEO satellite, or an LEO satellite that provides a service for the target cell, or may be a network device in a HAPS.

Optionally, when the device that provides a service for the target cell is a satellite, the determining unit 520 is further configured to report, to the network device, an architecture used for a satellite communication system that provides a service for the target cell. For example, the architecture used for the satellite communication system is of a regenerative type or a transparent type.

Optionally, when the device that provides a service for the target cell is a non-geostationary satellite (an MEO satellite, an LEO satellite, or an HEO satellite), the determining unit 520 is further configured to report a type of the target cell to the network device. For example, the target cell is a moving cell or a fixed cell.

In a possible implementation, the communications apparatus 500 may be a terminal device 70. A function of the determining unit may be implemented by a processor 702 in the terminal device, and a function of the transceiver unit may be implemented by using a transceiver 701 (namely, a combination of a control circuit and an antenna) in the terminal device. The following describes a structure of a terminal device in an embodiment of this application with reference to FIG. 14.

FIG. 14 is a schematic diagram of a structure of a terminal device according to an embodiment of this application. The terminal device is used in the system shown in FIG. 1, and performs functions of the terminal device in the foregoing method embodiments. For ease of description, FIG. 14 shows only main components of the terminal device. As shown in FIG. 14, the terminal device 70 includes a processor, a memory, a control circuit, an antenna, and an input/output apparatus. The processor is mainly configured to process a communications protocol and communication data, control the entire terminal device, execute a software program, and process data of the software program, for example, configured to support the terminal device in performing the actions described in the foregoing method embodiments. The memory is mainly configured to store the software program and the data. The control circuit is mainly configured to: perform conversion between a baseband signal and a radio frequency signal, and process the radio frequency signal. A combination of the control circuit and the antenna may also be referred to as a transceiver that is mainly configured to transmit and receive a radio frequency signal in a form of an electromagnetic wave. The input/output apparatus, such as a touchscreen, a display screen, and a keyboard, is mainly configured to receive data input by a user and output data to the user.

After the terminal device is powered on, the processor may read the software program in a storage unit, explain and execute instructions of the software program, and process the data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 14 shows only one memory and only one processor. In an actual terminal device, there may be a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process the communications protocol and the communication data. The central processing unit is mainly configured to control the entire terminal device, execute the software program, and process the data of the software program. Functions of the baseband processor and the central processing unit may be integrated into the processor in FIG. 14. A person skilled in the art may understand that the baseband processor and the central processing unit each may be an independent processor, and are interconnected by using a technology such as a bus. A person skilled in the art can understand that the terminal device may include a plurality of baseband processors to adapt to different network standards, the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communications protocol and the communication data may be built in the processor, or may be stored in the storage unit in a form of a software program. The processor executes the software program to implement a baseband processing function.

FIG. 15 is a schematic diagram of another example of a communications device according to an embodiment of this application. The communications apparatus 600 shown in FIG. 15 includes a determining unit 610 and a transceiver unit 620.

The determining unit 610 is configured to determine neighboring cell reporting indication information. The neighboring cell reporting indication information is used by a terminal device and a target cell obtained through measurement to determine whether to report a cell global identifier (CGI) of the target cell to the apparatus.

The transceiver unit 620 is configured to send the neighboring cell reporting indication information to the terminal device.

Optionally, the neighboring cell reporting indication information is used to indicate at least one type of the following content: a first-type network that needs to be reported, a first network corresponding to the first-type network, and a first cell corresponding to a first network type.

Optionally, the neighboring cell reporting indication information is used to indicate at least one type of the following content: a second-type network that does not need to be reported, a second network corresponding to the second-type network, and a second cell corresponding to a second network type.

Optionally, the neighboring cell reporting indication information is determined based on mobility supported by a cell on which neighboring cell relationship management is currently performed.

Optionally, the neighboring cell reporting indication information is carried in a CGI request message with respect to the target cell.

Optionally, the first-type network includes any one of the following networks: a public land mobile network, a standalone non-public network, a non-standalone non-public network, and a non-terrestrial network.

Optionally, the second-type network includes any one of the following networks: a public land mobile network, a standalone non-public network, a non-standalone non-public network, and a non-terrestrial network.

In a possible implementation, the communications apparatus 600 may be a network device, for example, a base station 80 described below. A function of the determining unit may be implemented by a processor 8022 in the base station, and a function of the transceiver unit may be implemented by using an RRU 801 in the base station 80. The following describes a structure of a network device in an embodiment of this application with reference to FIG. 16.

FIG. 16 is a schematic diagram of a structure of a network device according to an embodiment of this application, for example, may be a schematic diagram of a structure of a base station. As shown in FIG. 16, the base station may be applied to the system shown in FIG. 1, and perform a function of the network device in the foregoing method embodiments. The base station 80 may include one or more radio frequency units such as a remote radio unit (remote radio unit, RRU) 801 and one or more baseband units (baseband units, BBUs) (which may also be referred to as digital units, digital units, DUs) 802. The RRU 801 may be referred to as a transceiver unit, a transceiver, a transceiver circuit, a transceiver, or the like, and may include at least one antenna 8011 and a radio frequency unit 8012. The RRU 801 is mainly configured to: send and receive a radio frequency signal, and perform conversion between the radio frequency signal and a baseband signal, for example, configured to send the signaling message in the foregoing embodiments to a terminal device. The BBU 802 is mainly configured to: perform baseband processing, control the base station, and the like. The RRU 801 and the BBU 802 may be physically disposed together, or may be physically separated, that is, in a distributed base station.

The BBU 802, also referred to as a processing unit, is a control center of the base station, and is mainly configured to implement baseband processing functions such as channel coding, multiplexing, modulation, and spectrum spreading. For example, the BBU (the processing unit) 802 may be configured to control the base station to perform an operation procedure related to the network device in the foregoing method embodiments.

In an example, the BBU 802 may include one or more boards. A plurality of boards may jointly support a radio access network (such as an LTE network) of a single access standard, or may respectively support radio access networks (such as an LTE network, a 5G network, or another network) of different access standards. The BBU 802 further includes a memory 8021 and a processor 8022. The memory 8021 is configured to store necessary instructions and necessary data. For example, the memory 8021 stores a correspondence between a codebook index and a precoding matrix in the foregoing embodiments. The processor 8022 is configured to control the base station to perform a necessary action, for example, is configured to control the base station to perform the operation procedure related to the network device in the foregoing method embodiments. The memory 8021 and the processor 8022 may serve one or more boards. In other words, a memory and a processor may be independently disposed on each board, or a plurality of boards may share a same memory and a same processor. In addition, a necessary circuit may be further disposed on each board.

It should be understood that the processor in the embodiments of this application may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that the memory in the embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the methods provided in the embodiments of this application, this application further provides a computer program product. The computer program product includes computer program code. When the computer program code is run on a computer, the computer is enabled to perform the method according to any one of the embodiments shown in FIG. 10 to FIG. 12.

According to the methods provided in the embodiments of this application, this application further provides a computer-readable medium. The computer-readable medium stores program code. When the program code is run on a computer, the computer is enabled to perform the method according to any one of the embodiments shown in FIG. 10 to FIG. 12.

According to the methods provided in the embodiments of this application, this application further provides a chip system. The chip system includes a processor, configured to: invoke a computer program from a memory, and run the computer program, so that a communications device on which the chip system is installed performs the method according to any one of the embodiments shown in FIG. 10 to FIG. 12.

According to the methods provided in the embodiments of this application, this application further provides a system. The system includes the foregoing one or more terminal devices and the foregoing one or more network devices.

All or some of the foregoing embodiments may be implemented by software, hardware, firmware, or any combination thereof. When software is used to implement the embodiments, all or some of the foregoing embodiments may be implemented in a form of a computer program product. The computer program product includes one or more computer instructions or computer programs. When the program instructions or the computer programs are loaded and executed on a computer, all or some of the procedure or functions according to the embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

For ease of understanding, the following describes terms used in a process of describing the solutions in this application.

In the embodiments of this application, the "indication" may include a direct indication and an indirect indication, or may include an explicit indication and an implicit indication. Information indicated by using a piece of information (for example, the indication information described above) is referred to as to-be-indicated information. In a specific implementation process, the to-be-indicated information is indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is already learned of or pre-agreed on. For example, specific information may also be indicated by using a pre-agreed (for example, specified in a protocol) arrangement sequence of various pieces of information, to reduce indication overheads to some extent.

In the embodiments of this application, terms and English abbreviations such as a cell global identifier (CGI), a physical cell identifier (PCI), an automatic neighbor relation (ANR), a public land mobile network (PLMN), a standalone non-public network (SNPN), a non-standalone non-public network (CAG), a non-terrestrial network (NTN) are all examples for ease of description, and should not constitute any limitation on this application. This application does not exclude a possibility of defining another term that can implement a same or similar function in an existing or a future protocol.

In the embodiments of this application, the "communications protocol" may be a standard protocol in the communications field, for example, may include an LTE protocol, an NR protocol, and a related protocol applied to a future communications system. This is not limited in this application.

The term "and/or" in this specification describes only an association relationship between associated objects and represents that three relationships may exist. For example, A and/or B may represent the following three cases: Only A exists, both A and B exist, and only B exists. In addition, the character "/" in this specification usually represents an "or" relationship between the associated objects.

Sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps can be implemented by electronic hardware or a combination of computer software and electronic hardware. Whether the functions are performed by using hardware or software depends on a particular application and a design constraint condition of the technical solutions. A person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

In addition, functional units in the embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communications method performed by a terminal device, the method comprising the steps of:
receiving (310) a cell global identifier, CGI, request message with respect to a target cell from a network device; and
determining (320), based on a capability of the terminal device, whether to report a CGI of the target cell to the network device, wherein the capability is related to a type of a first-type network, and the target cell belongs to the first-type network;
wherein the first-type network comprises any one of the following networks: a public land mobile network, a standalone non-public network, a non-standalone non-public network, and a non-terrestrial network.

2. The method according to claim 1, wherein the determining, based on a capability, whether to report a CGI of the target cell to the network device comprises:
reporting the CGI of the target cell to the network device when there is a capability of accessing the first-type network; or
skipping reporting the CGI of the target cell to the network device when there is no capability of accessing the first-type network.

3. The method according to claim 1, wherein the determining, based on a capability, whether to report a CGI of the target cell to the network device comprises:
reporting the CGI of the target cell to the network device when there is a capability of accessing the first-type network and the capability of accessing the first-type network is enabled; or
skipping reporting the CGI of the target cell to the network device when there is a capability of accessing the first-type network and the capability of accessing the first-type network is not enabled.

4. The method according to claim 1, wherein the determining, based on a capability, whether to report a CGI of the target cell to the network device comprises:
reporting the CGI of the target cell to the network device when a first network can be accessed; or
skipping reporting the CGI of the target cell to the network device when a first network cannot be accessed, wherein the target cell belongs to the first network.

5. The method according to any one of claims 1 to 4, wherein when it is determined to report the CGI of the target cell to the network device, and the target cell belongs to the non-terrestrial network, the method further comprises:
reporting a service parameter of the target cell to the network device, wherein the service parameter of the target cell comprises one or more of the following: a type of a device that provides a service for the target cell, an architecture of a satellite communication system to which the device that provides a service for the target cell belongs, and a type of the target cell, wherein
the type of the device that provides a service for the target cell comprises a low earth orbit satellite, a medium earth orbit satellite, a highly elliptical orbit satellite, a geostationary earth orbit satellite, or a network device in a high altitude platform communications system;
the architecture of the satellite communication system comprises a regenerative type or a transparent type; and
the type of the target cell comprises a fixed cell or a moving cell.

6. A terminal device, comprising units configured to perform the method of any one of claims 1-5.

7. A computer-readable storage medium, wherein the computer-readable storage medium stores a computer program, which when run on a computer causes the computer to perform the method according to any one of claims 1 to 5.

## Patentansprüche

1. Kommunikationsverfahren, das von einem Endgerät durchgeführt wird, das Verfahren die folgenden Schritte umfassend:
Empfangen (310) einer Anforderungsnachricht für eine globale Zellenkennung, CGI, hinsichtlich einer Zielzelle aus einer Netzwerkvorrichtung;
und
Bestimmen (320), basierend auf einer Fähigkeit des Endgeräts, ob einer Netzwerkvorrichtung eine CGI der Zielzelle gemeldet werden soll, wobei
die Fähigkeit einen Typ eines Netzwerks eines ersten Typs betrifft und die Zielzelle zu dem Netzwerk des ersten Typs gehört; wobei das Netzwerk des ersten Typs eines der folgenden Netzwerke umfasst: ein öffentliches landgestütztes Mobilfunknetz, ein eigenständiges nicht öffentliches Netzwerk, ein nicht eigenständiges nicht öffentliches Netzwerk und ein nicht terrestrisches Netzwerk.

2. Verfahren nach Anspruch 1, wobei das Bestimmen, basierend auf einer Fähigkeit, ob der Netzwerkvorrichtung eine CGI der Zielzelle gemeldet werden soll, Folgendes umfasst:
Melden der CGI der Zielzelle an die Netzwerkvorrichtung, wenn es eine Fähigkeit zum Zugreifen auf das Netzwerk eines ersten Typs gibt; oder
Überspringen des Meldens der CGI der Zielzelle an die Netzwerkvorrichtung, wenn es keine Fähigkeit zum Zugreifen auf das Netzwerk des ersten Typs gibt.

3. Verfahren nach Anspruch 1, wobei das Bestimmen, basierend auf einer Fähigkeit, ob der Netzwerkvorrichtung eine CGI der Zielzelle gemeldet werden soll, Folgendes umfasst:
Melden der CGI der Zielzelle an die Netzwerkvorrichtung, wenn es eine Fähigkeit zum Zugreifen auf das Netzwerk eines ersten Typs gibt und die Fähigkeit zum Zugreifen auf das Netzwerk des ersten Typs aktiviert ist; oder
Überspringen des Meldens der CGI der Zielzelle an die Netzwerkvorrichtung, wenn es eine Fähigkeit zum Zugreifen auf das Netzwerk des ersten Typs gibt und die Fähigkeit zum Zugreifen auf das Netzwerk des ersten Typs nicht aktiviert ist.

4. Verfahren nach Anspruch 1, wobei das Bestimmen, basierend auf einer Fähigkeit, ob der Netzwerkvorrichtung eine CGI der Zielzelle gemeldet werden soll, Folgendes umfasst:
Melden der CGI der Zielzelle an die Netzwerkvorrichtung, wenn auf ein erstes Netzwerk zugegriffen werden kann; oder
Überspringen des Meldens der CGI der Zielzelle an die Netzwerkvorrichtung, wenn auf ein erstes Netzwerk nicht zugegriffen werden kann, wobei die Zielzelle zum ersten Netzwerk gehört.

5. Verfahren nach einem der Ansprüche 1 bis 4, wobei, wenn bestimmt wird, der Netzwerkvorrichtung die CGI der Zielzelle zu melden, und die Zielzelle zu dem nichtterrestrischen Netzwerk gehört, das Verfahren weiterhin Folgendes umfasst:
Melden der Netzwerkvorrichtung eines Dienstparameters der Zielzelle, wobei der Dienstparameter der Zielzelle mindestens einen der Folgenden umfasst: einen Typ einer Vorrichtung, die der Zielzelle einen Dienst bereitstellt, eine Architektur eines Satellitenkommunikationssystems, zu dem die Vorrichtung gehört, die der Zielzelle einen Dienst bereitstellt, und einen Typ der Zielzelle, wobei
der Typ der Vorrichtung, die der Zielzelle einen Dienst bereitstellt, einen Satelliten mit niedrigem Orbit, einen Satelliten mit mittlerem Orbit, einen Satelliten mit stark elliptischem Orbit, einen Satelliten mit geostationärem Orbit oder eine Netzwerkvorrichtung in einem Kommunikationssystem mit großer Plattformhöhe umfasst;
die Architektur des Satellitenkommunikationssystems einen regenerativen Typ oder einen transparenten Typ umfasst; und der Typ der Zielzelle eine feste Zelle oder eine bewegliche Zelle umfasst.

6. Endgerät, das Einheiten umfasst, die eingerichtet sind, um das Verfahren nach einem der Ansprüche 1 bis 5 durchzuführen.

7. Computerlesbares Speichermedium, wobei das computerlesbare Speichermedium ein Computerprogramm speichert, das, wenn es auf einem Computer ausgeführt wird, bewirkt, dass der Computer das Verfahren nach einem der Ansprüche 1 bis 5 durchführt.

## Revendications

1. Procédé de communication réalisé par un dispositif terminal, le procédé comprenant les étapes consistant à :
recevoir (310), en provenance d'un dispositif de réseau, un message de demande d'identifiant global de cellule (CGI) concernant une cellule cible ; et
déterminer (320), sur la base d'une capacité du dispositif terminal, s'il faut signaler un CGI de la cellule cible au dispositif de réseau,
la capacité étant liée à un type d'un réseau de premier type, et la cellule cible appartenant au réseau de premier type ;
le réseau de premier type comprenant l'un quelconque des réseaux suivants : un réseau mobile terrestre public, un réseau non public autonome, un réseau non public non autonome et un réseau non terrestre.

2. Procédé selon la revendication 1, dans lequel le fait de déterminer, sur la base d'une capacité, s'il faut signaler un CGI de la cellule cible au dispositif de réseau comprend l'étape consistant à :
signaler le CGI de la cellule cible au dispositif de réseau lorsqu'il existe une capacité d'accès au réseau de premier type ; ou
omettre de signaler le CGI de la cellule cible au dispositif de réseau lorsqu'il n'existe pas de capacité d'accès au réseau de premier type.

3. Procédé selon la revendication 1, dans lequel le fait de déterminer, sur la base d'une capacité, s'il faut signaler un CGI de la cellule cible au dispositif de réseau comprend l'étape consistant à :
signaler le CGI de la cellule cible au dispositif de réseau lorsqu'il existe une capacité d'accès au réseau de premier type et la capacité d'accès au réseau de premier type est activée ; ou
omettre de signaler le CGI de la cellule cible au dispositif de réseau lorsqu'il existe une capacité d'accès au réseau de premier type et la capacité d'accès au réseau de premier type n'est pas activée.

4. Procédé selon la revendication 1, dans lequel le fait de déterminer, sur la base d'une capacité, s'il faut signaler un CGI de la cellule cible au dispositif de réseau comprend l'étape consistant à :
signaler le CGI de la cellule cible au dispositif de réseau lorsqu'un premier réseau est accessible ; ou
omettre de signaler le CGI de la cellule cible au dispositif de réseau lorsqu'un premier réseau n'est pas accessible, la cellule cible appartenant au premier réseau.

5. Procédé selon l'une quelconque des revendications 1 à 4, le procédé comprenant en outre, lorsqu'il est déterminé qu'il faut signaler le CGI de la cellule cible au dispositif de réseau et que la cellule cible appartient au réseau non terrestre, l'étape consistant à :
signaler un paramètre de service de la cellule cible au dispositif de réseau, le paramètre de service de la cellule cible comprenant un ou plusieurs des éléments suivants : un type d'un dispositif qui fournit un service à la cellule cible, une architecture d'un système de communication par satellite auquel appartient le dispositif qui fournit un service à la cellule cible, et un type de la cellule cible,
le type du dispositif qui fournit un service à la cellule cible comprenant un satellite à orbite terrestre basse, un satellite à orbite terrestre moyenne, un satellite à orbite hautement elliptique, un satellite à orbite terrestre géostationnaire ou un dispositif de réseau dans un système de communication de plateforme à haute altitude ;
l'architecture du système de communication par satellite comprenant un type régénératif ou un type transparent ; et
le type de la cellule cible comprenant une cellule fixe ou une cellule mobile.

6. Dispositif terminal, comprenant des unités configurées pour réaliser le procédé selon l'une quelconque des revendications 1 à 5.

7. Support de stockage lisible par ordinateur, le support de stockage lisible par ordinateur stockant un programme informatique qui, lorsqu'il est exécuté sur un ordinateur, amène l'ordinateur à réaliser le procédé selon l'une quelconque des revendications 1 à 5.
